# EUROPEAN PATENT SPECIFICATION

(11) **EP 0 497 413 B1**
(45) Date of publication and mention of the grant of the patent: **24.04.1996**
(21) Application number: 92200195.3
(22) Date of filing: 24.01.1992
(51) Int. Cl.: H04B 1/66

(54) **Subband coding system and a transmitter comprising the coding system**
Teilbandkodierer und Sender unter Verwendung dieses Kodierers
Dispositif de codage par sous-bandes et émetteur muni de ce dispositif

(30) Priority: 01.02.1991 NL 9100173
(43) Date of publication of application: 05.08.1992
(73) Proprietor: Philips Electronics N.V., NL-5621 BA Eindhoven (NL)
(72) Inventor: Veldhuis, Raymond Nicolaas Johan, NL-5656 AA Eindhoven (NL); van der Waal, Robbert Gerbrand, NL-5656 AA Eindhoven (NL); van de Kerkhof, Leon Maria, NL-5656 AA Eindhoven (NL)
(74) Representative: van der Kruk, Willem Leonardus

(56) References cited:
- EP-A- 0 176 243
- EP-A- 0 402 973
- GB-A- 2 224 185

## Description

The invention relates to a coding system comprising a subband coder for subband coding of a wideband digital signal, for example, a digital stereo audio signal, constituted by at least first and second signal components which are sampled each with a specific sampling frequency Fₛ, the subband coder including signal splitting means for generating, in response to the wideband digital signal, a number of M subband signals by means of a sampling frequency reduction, for which purpose the splitting means split up the wideband signal into successive subbands having band numbers m which augment with frequency, where 1 ≤ m ≤ M, and in which each subband signal is constituted by at least first and second subband signal components, the coding system further including quantizing means for quantizing block-by-block the first and second subband signal components in a subband SBₘ, a quantized subband signal component comprising successive signal blocks, each signal block containing q samples, the q samples in corresponding signal blocks of the first and second quantized subband signal components in the subband SBₘ being represented by nₘ₁ and nₘ₂ bits respectively, and in which in an intensity mode coding for at least one of the subbands the quantizing means are arranged for combining corresponding samples of the first and second subband signal components in the subband so as to obtain a composite signal in the subband, and are arranged for quantizing block-by-block the composite signal in the subband, the quantized composite signal in the subband being constituted by successive signal blocks, each signal block containing q samples where the q samples in a signal block of the quantized composite signal are represented each by n_{mc} bits, the system further including scale factor information determining means for determining information related to a scale factor belonging to each q-sample signal block in the first and second subband signal components of the subbands, to a transmitter comprising the coding system, to a receiver and to an encoding method.

The system of the type mentioned in the opening paragraph is known from Dutch Patent Application No. 90.00.338 (PHN 13.241), *cf*. document (2b) in the reference list at the back of this Application. With prior-art system it is possible with some subbands to code the first and second subband signal components in the subbands in a so-called intensity mode. In that case the left and right signal components are combined for obtaining a type of mono signal. Such a signal coding is used if the phase difference between the left and right subband signal components is not important, but if the waveform of the mono signal is important indeed. This is especially the case for signals in higher subbands, because the human auditory system is less phase-sensitive to the frequencies in these subbands. By implementing such a coding, a smaller information content for the subband to be transmitted will suffice with a certain coding accuracy, or a larger information content with a greater coding accuracy. On reproduction at the receiver end a stereo effect is realised known by the name of intensity stereo. Only the intensities of the left and right subband signal components differ, having the different values for the scale factors belonging to the first and second subband signal components.

Prior-art system is disadvantageous in that the coding in the intensity mode does not always lead to a good signal transmission.

It is an object of the invention to provide a system with which, even in the cases where no good transmission takes place, a good transmission may yet be realised.

The system according to the invention is characterized in that the system comprises angle determining means arranged for determining a straight line in a plane formed by a fictive rectangular co-ordinate system having two orthogonal axes, for each of the subbands for which an intensity mode coding is possible and for corresponding signal blocks in the first and second subband signal components of such a subband, the line traversing the origin of the co-ordinate system and traversing a point cloud of q points in the plane, which points are formed by combining the k^{th} sample from a q-sample signal block in the first subband signal component with the k^{th} sample from the corresponding q-sample signal block in the second subband signal component, where k varies from 1 to q, and, for determining the k^{th} point in the plane, by plotting the k^{th} sample of the first subband signal component along one axis of the co-ordinate system and the k^{th} sample of the second subband signal component along the other axis, and in that for the line it holds that a distance measure which is a measure of the distance from the line to all the q points is minimum, in that the angle determining means are further arranged for determining an angle β in essence equal to the angle formed by the line and the axis of the co-ordinate system along which the samples of the first subband signal component are plotted, in that the angle determining means comprise a comparator for comparing the distance measure with a threshold, in that the comparator is arranged for generating a control signal if the distance measure does not exceed the threshold, and in that the quantizing means are arranged for performing an intensity mode coding of the corresponding signal blocks in the first and second subband signal components of the relevant subband in response to the control signal, and in that the quantizing means to this end comprise signal combining means for multiplying the q samples of the first subband signal component by cos(α), for multiplying the q corresponding samples of the second subband signal component by -sin(α) and for combining subsequent to the multiplication the corresponding samples of the q-sample first and second subband signal components to become the composite subband signal, and in that α has a relation to the angle β.

The invention is based on the recognition that prior-art intensity code means that corresponding samples l[k], r[k] in a signal block of the first and second subband signal components in a subband are projected on a line traversing the origin of an l-r co-ordinate system at an angle of 45°, in which the points l[k],r[k] in the plane of the co-ordinate system are obtained by plotting the sample l[k] along the l-axis and the corresponding sample r[k] along the r-axis of the co-ordinate system. The transmission in the intensity mode actually means that only the length of the projections of the points on the line, calculated from the origin, are transmitted as samples of the composite subband signal. Such a coding works out favourably for the cloud of points of sample pairs l[1],r[1] to l[q],r[q], which is essentially located in the first and third quadrants of the co-ordinate system, but is less favourable for a cloud of points located in the second and fourth quadrants.

The measure according to the invention is based on the concept of determining a projection line as a function of the location of the cloud of points, this line traversing this cloud of points in the most advantageous way. Subsequently, the points are projected on this projection line. According to the invention this means that α=-β. The length, calculated from the origin, of the projections of these points on this projection line are now transmitted as samples inclusive of their signs of the composite subband signal. The result of this coding is that a better transmission is realised. On the other hand, this coding means that one of the scale factors may now be negative. In the format of the data signal *via* which the information is to be transmitted, the fact that one of the scale factors may be negative is to be taken into consideration, that is, by reserving an additional sign bit for this scale factor in the data stream. This would imply an extension of the signal format as described in aforementioned Dutch Patent Application 90.00.338.

If one does not wish any extension of the format, in the way that one does not wish to introduce an additional sign bit in the signal format, the system may be characterized in that for the case where β satisfies the condition of 0 ≤ β ≤ 90°, it holds that α = -β, in that for the case where β satisfies the condition of 90° < β < 135°, it holds that α = -90°, and in that for the case where β satisfies the condition of -45° < β < 0, it holds that α = 0°. This means that the cloud of points of sample pairs l[k],r[k] situated in the first and third quadrants of the l-r co-ordinate system, is coded in the manner described hereinbefore. For a cloud of points of sample pairs l[k],r[k] located in the second and fourth quadrants, it holds that the points are projected on either the 1-axis if 90° < β < 135°, or the r-axis if -45° < β < 0°, and that the lengths of the projections on these axes are used as the samples of the composite subband signal which are transmitted. Since projections are made on the l-axis or the r-axis, a sign bit has become redundant. In addition, such a transmission is still an improvement relative to prior-art transmission. This is because a projection on the l-axis or the r-axis is a better approximate of the sample pairs than if projections were made on the line traversing the origin of the co-ordinate system at an angle of 45° as according to prior-art coding.

The scale factors SFₗ and SFᵣ may be obtained in various ways. The scale factors may be derived in known manner from the original subband signal components. Another possibility is that the scale factors are derived from the composite scale factor SFₗᵣ of the composite subband signal. The system according to the invention is thereto characterized in that for determining the scale factor belonging to the corresponding signal block of the first subband signal component of which the composite subband signal is composed, the determining means are arranged for multiplying the composite scale factor by cos α, and in that for determining the scale factor belonging to the corresponding signal block of the second subband signal component of which the subband signal is composed, the determining means are arranged for multiplying the composite scale factor by (-sin α).

In this case the scale factors SFₗ and SFᵣ are transmitted *via* the transmission medium.

Another possibility is that the composite scale factor SFₗᵣ and the angle α are transmitted and that the scale factors SFₗ and SFᵣ are reconstructed from SFₗᵣ and α not until the receiver end is reached.

Another possibility is that the system is characterized in that for determining the scale factor belonging to the corresponding signal block of the first subband signal component of which the composite subband signal is composed, the determining means are arranged for calculating the magnitude${\text{SF}}_{\text{lr}} \sqrt{{\text{S}}_{\text{11}} {\text{/S}}_{\text{2}}}$ where S₁₁ is equal to the sum of the squares of the amplitudes of the q samples in the signal block of the first subband signal component, S₂ is equal to the sum of the squares of the q samples in the signal block of the composite subband signal, and SFₗᵣ is the composite scale factor corresponding to the amplitude of the largest sample in the q-sample signal block in the composite subband signal. In this case the requirement is posed that the powers of the first subband signal component before and after transmission are equal. A similar calculation may be performed for obtaining the scale factor for the second subband signal component.

It should be observed that this calculation of the scale factors, which is thus based on maintaining equal subband signal component powers on receiver and transmitter sides, is apart from the intensity mode coding according to the present invention, but that this calculation is likewise usable for the state-of-the-art intensity mode coding.

The system according to the invention may further be characterized in that the scale factor information determining means comprise
- second quantizing means for quantizing the scale factor which belongs to the corresponding signal block of the first and/or second subband signal component of which the composite subband signal is composed,
- dequantizing means for dequantizing the scale factors quantized in the second quantizing means, and
- dividing means for dividing the scale factor and the dequantized scale factor into one another so as to obtain a coefficient, and in that the quantizing means comprise multiplier means for multiplying the q samples of the composite subband signal by the coefficient. If the system is further characterized in that the coefficient is equal to SFₗ/SF'ₗ, where SFₗ is the scale factor belonging to the corresponding signal block of the first subband signal component of which the composite subband signal is composed, and SF'ₗ is the value of the quantized scale factor SFₗ subsequent to dequantization, a compensation may be made in this case for quantization errors occurring during quantization of the scale factor belonging to the first subband signal component. If, instead, the system is characterized in that the coefficient is equal to SFᵣ/SF'ᵣ, where SFᵣ is the scale factor belonging to the corresponding signal block of the second subband signal component of which the composite subband signal is composed, and SF'ᵣ is the value of the quantized scale factor SFᵣ subsequent to dequantization, a compensation may be made for quantization errors occurring during the quantization of the scale factor belonging to the second subband signal component. It should be stated, however, that the compensation for the quantization error in one scale factor for one channel means that the transmission in the other channel produces an error which, expressed in dB, is equal to the maximum quantization step size (dB) in the scale factors.

Also in this case it should be expressly stated that aforesaid compensation for quantization errors in either or both scale factors is detached from the intensity mode coding according to the invention, and from the calculation of the scale factors as will be discussed with reference to claim 10. The compensation is thus also applicable to the state-of-the-art intensity mode coding.

In another embodiment of the invention this system is characterized in that the coefficient is a function of${\text{SF'}}_{\text{l}} {\text{/ SF}}_{\text{l}} \text{and} {\text{SF'}}_{\text{r}} {\text{/ SF}}_{\text{r}}$ where SFₗ and SFᵣ are the scale factors belonging to the corresponding signal blocks of the first and second subband signal components respectively, of which the composite subband signal is composed, and SF'ₗ and SF'ᵣ are the values of the quantized scale factors SFₗ and SFᵣ subsequent to dequantization. In this case a compensation is made for the quantization errors in one and also in the other scale factor. The compensation is not complete for either scale factor, but a compensation compensating for at least part of the quantization error is now performed in the two channels.

The invention will now be explained in the description of the drawing Figures with reference to a number of exemplary embodiments, in which:
Fig. 1 shows a subband coding system,
Fig. 2 shows prior-art stereo intensity coding in the system shown in Fig. 1,
Fig. 3 gives a further explanation of prior-art stereo intensity coding,
Figs. 4 and 5 give explanations of the stereo intensity coding according to the invention,
Fig. 6 in Fig. 6a shows the section of the subband coding system shown in Fig. 1, which is capable of performing the stereo intensity coding according to the invention, and in Figs. 6b, 6c and 6d three exemplary embodiments of receivers for decoding the signals coded in the system shown in Fig. 6a,
Fig. 7 gives an explanation of the behaviour of the scale factors as a function of the rotation angle α,
Fig. 8 gives an explanation of another embodiment of the stereo intensity coding according to the invention,
Fig. 9 shows the section of the subband coding system shown in Fig. 1, which is capable of performing the stereo intensity code as discussed with reference to Fig. 8,
Fig. 10 shows another exemplary embodiment of the section of the subband coding system shown in Fig. 1, which is capable of performing the stereo intensity code according to the invention,
Fig. 11 shows a detail of another exemplary embodiment,
Fig. 12 shows a detail of yet another exemplary embodiment, and
Fig. 13 shows the use of the coding system in a transmitter in the form of a recording device for recording the quantized subband signals on a magnetic record carrier.

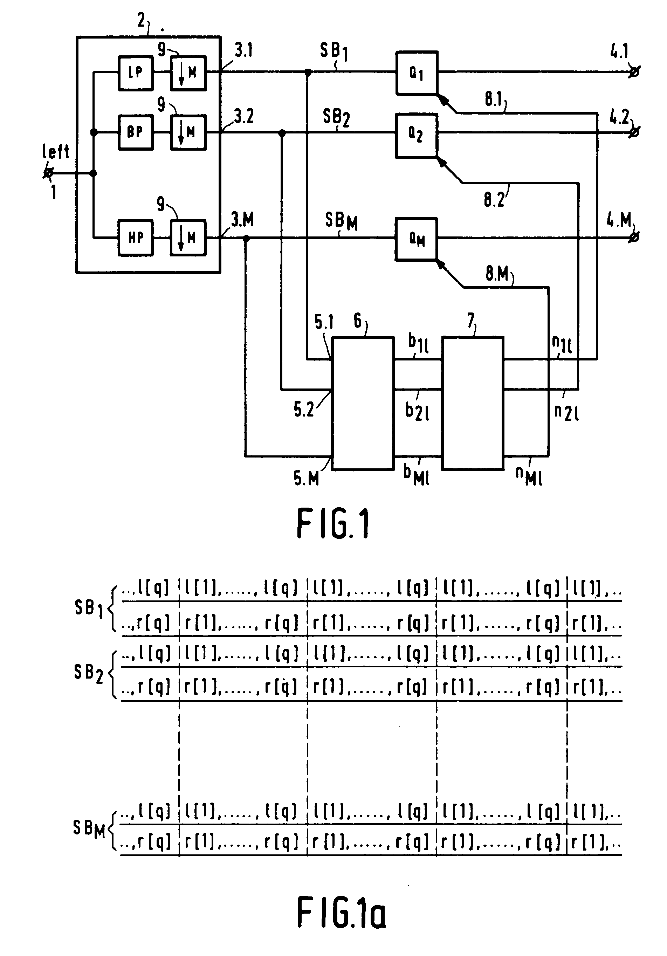

Fig. 1 shows the coding system. A wideband digital signal is applied to the input terminal 1. One may think in this respect of an audio signal having a bandwidth of about 20 kHz. The audio signal may be a stereo audio signal. In that case only one of the two signal components (left or right signal component) of the stereo audio signal will be discussed. The same will happen then with the other signal component.

For example, 16-bit samples of the left signal component of the audio signal are applied to the input 1 with a sampling frequency of 44 kHz. The audio signal is applied to a subband coder 2 which comprises signal splitting means. The subband coder 2 splits up the audio signal into M subbands by means of M filters, that is to say, a low-pass filter LP, M-2 band-pass filters BP and a high-pass filter HP. For example, M is equal to 32. The sampling frequency of the M subband signals is reduced in the blocks referenced 9. The sampling frequency is reduced therein by a factor of M. The signals thus obtained are presented at the outputs 3.1, 3.2, ..., 3.M. The signal in the lowest subband SB₁ is presented at output 3.1. The signal in the lowest but one subband SB₂ is presented at output 3.2. The signal in the highest subband SB_{M} is presented at the output 3.M. The signals at the outputs 3.1 to 3.M have the form of successive samples expressed in 16 or over, for example, 24-bit numbers. Thus, the samples of the left subband signal component appear at the outputs 3.1 to 3.M of Fig. 1. These samples are referenced l[k]. The subband coding system for the right signal component of the audio signal similarly produces samples r[k] of the right signal component in the subbands SB₁ to SB_{M}. This is shown in Fig. 1a.

In the present exemplary embodiment the subbands SB₁ to SB_{M} have all the same width. This is not necessary, however. Prior-art publication (5), Krasner, discusses for example, a subdivision into a number of subbands whose bandwidths approximately correspond to the bandwidths of the critical bands of the human auditory system in the respective frequency ranges.

The operation of the subband coder 2 will not be discussed any further, because the operation of a subband coder has already been extensively discussed. To this end reference be made to prior-art documents (1), (5) and (7).

The subband signals are combined in successive signal blocks of q successive samples, *cf.* Fig. 1a, and applied to the associated quantizers Q₁ to Q_{M}. In a quantizer Qₘ the samples are quantized to quantized samples having a number of bits nₘ smaller than 16.

Fig. 1 shows how the left subband signals are applied to an associated quantizer Qₘ in signal blocks of q successive samples which are the samples l[1] to l[q]. In similar fashion the right subband signals are applied to an associated quantizer (not shown) in signal blocks of q successive samples which are the samples r[1] to r[q]. For example, q is equal to 12.

During quantization, the signal blocks (groups) of q successive samples of the subband signal components are quantized to a smaller number of bits. For this purpose, the q samples in a signal block are first normalized. This normalization is effected by dividing the amplitudes of the q samples by the amplitude of the sample having the largest absolute value in the signal block. The amplitude of the sample having the largest amplitude in the signal block of the subband SBₘ provides the scale factor SFₘ, *cf*. document (2a), (2b). Subsequently, the amplitudes of the normalized samples, which are now situated in an amplitude range from -1 to +1 are quantized.

In prior-art document (2b) this quantization is extensively discussed, *cf*. Figs. 24, 25 and 26 and the associated descriptions in that document.

The quantized samples in the subbands SB₁ to SB_{M} are thereafter presented at the respective outputs 4.1 to 4.M.

The outputs 3.1 to 3.M are further coupled to the respective inputs 5.1 to 5.M of the bit need determining means 6. The bit need determining means 6 determine the bit needs bₘₗ and bₘᵣ for q-sample signal blocks corresponding with time of the left and right subband signal components in the subbands SB₁ to SB_{M}. The bit needs bₘₗ and bₘᵣ are numbers related to the number of bits with which the q samples in a q-sample signal block of the left or right subband signal components respectively, of a signal of the subband m ought to be quantized.

The bit needs b₁ₗ to b_{Ml}, and b₁ᵣ to b_{Mr} derived by the bit need determining means 6 are applied to bit allocation means 7. The bit allocation means 7 determine, on the basis of the bit needs, the real number of bits n₁ₗ to n_{Ml} and n₁ᵣ to n_{Mr} with which the q samples of the corresponding signal blocks of the left and right subband signal components in the subband signals SB₁ to SB_{M} are quantized. Control signals corresponding to the numbers n₁ₗ to n_{Ml} are applied to the respective quantizers Q₁ to Q_{M} over the lines 8.1 to 8.M, so that the quantizers are capable of quantizing the samples with the correct numbers of bits. Similarly, control signals corresponding to the numbers n₁ᵣ to n_{Mr} are applied to associated quantizers (not shown) for the right subband signal components, so that also these quantizers are capable of quantizing the samples of the right subband signal components with the correct numbers of bits.

The documents (9a) and (9b) of the reference list extensively discuss how the bit need determining means 6 and the bit allocation means 7 may function.

The publication (2b) of the reference list describes how in a stereo intensity mode the left and right subband signal components in a subband are combined in one or more subbands, *cf*. more particularly the description of Fig. 15c in the publication (2b).

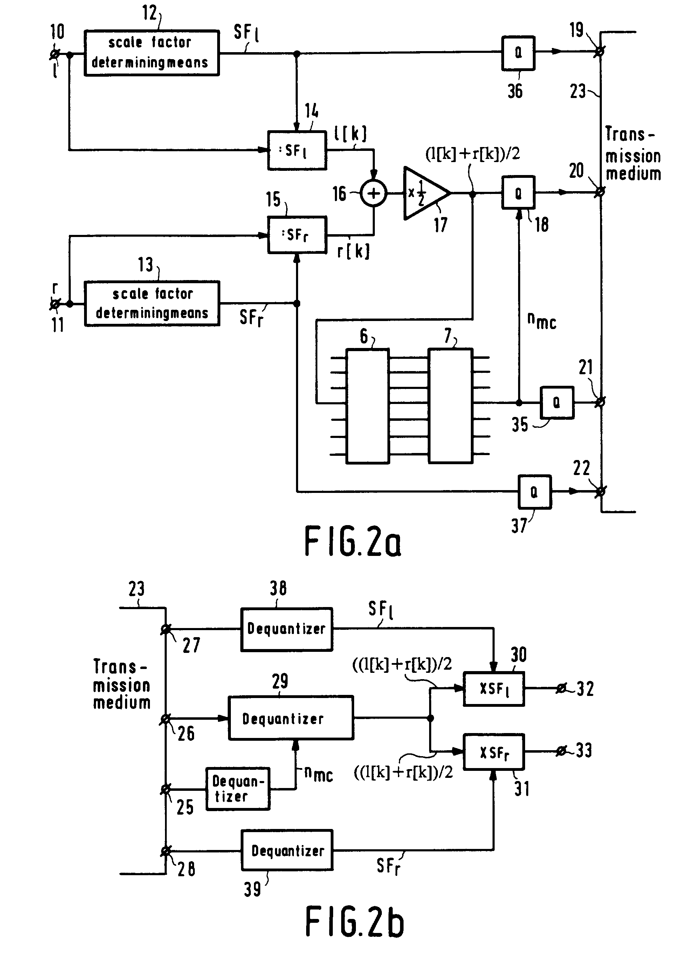

Fig. 2a shows the structure of this part of the coding system in the publication (2b), which performs a stereo intensity coding of the left and right subband signal components in a subband SBₘ. The input terminal 10 is constantly supplied with q-sample signal blocks of the first subband signal component *i.e.* the left subband signal component in the subband SBₘ. The input terminal 11 is constantly supplied with q-sample signal blocks of the second subband signal component *i.e.* the right subband signal component in the subband SBₘ. The left subband signal component referenced l is applied both to a unit 12 and a divider 14. In the unit 12 a scale factor SFₗ is determined for each signal block in the left subband signal component. This scale factor is equal to, for example, the amplitude of the largest sample in the signal block. In the divider 14 all the samples of the signal block are divided by the scale factor SFₗ. The output of the divider 14 then presents normalized samples referenced l[k] where k varies from 1 to q. The samples l[k] are applied to a first input of a signal combining unit 16 formed by an adder. The right subband signal component referenced r is applied both to the unit 13 and to a divider 15. In the unit 13 a scale factor SFᵣ is determined for each signal block in the right subband signal component, which factor is in this case also equal to the amplitude of the largest sample of the signal block. In the divider 15 all the samples in the signal block are divided by the scale factor SFᵣ. The output of the divider 15 then presents normalized samples r[k] which are applied to a second input of the signal combining unit 16. Also in this case k varies from 1 to q. In an additional divider 17 the summed samples l[k]+r[k] are divided by 2. The samples thus obtained are applied to the quantizer 18.

The bit need determining means 6 and the bit allocation means 7 determine, in the manner described, for example, in the documents (9a) and (9b), the number of bits n_{mc} by which the samples in the signal block of the composite subband signal in the subband SBₘ are to be represented. The quantized signal block of the composite subband signal quantized in the quantizer 18 is then applied to the input 20 of a transmission medium 23. Similarly, the scale factors SFₗ and SFᵣ belonging to the corresponding signal blocks in the left and right subband signal components are applied, after quantization in the quantizers 36 and 37 respectively, to the respective inputs 19 and 22 of the transmission medium 23. Furthermore, the allocation information n_{mc} denoting the number of bits by which the samples in the signal block of the quantized composite subband signal are represented, are applied, subsequent to quantization in the quantizer 35, to the input 21 of the transmission medium 23. The method described above is constantly repeated for successive corresponding signal blocks in the left and right signal components of the subband SBₘ.
The transmission medium 23 may have the form of a wireless transmission such as, for example, a radio transmit channel. However, other transmission mediums are also possible. One may think of optical transmission, for example, through optical fibres or optical record carriers such as compact disc-like media, or a transmission by means of magnetic record carriers utilizing, for example, RDAT or SDAT-like recording or reproducing techniques as described, for example, in document (8) in the reference list.

At the receiver end of the transmission medium 23, *cf.* Fig. 2b, the q-sample signal block of the composite subband signal in the subband SBₘ is derived from the data stream of the quantized samples applied to a dequantizer 29 through the input 26 in response to the allocation information n_{mc} also applied to the dequantizer 29 through the input 25. This method is extensively discussed in document (2b) of the reference list. The samples thus obtained are then applied to multipliers 30 and 31. The scale factor information is also derived from the data stream sent to the receiver *via* the transmission medium 23. This scale factor information comprises the scale factors SFₗ and SFᵣ which are also applied to the multipliers 30 and 31 through the inputs 27 and 28 respectively. The samples in the signal block of the composite subband signal are multiplied by SFₗ and SFᵣ in the multipliers 30 and 31 respectively. The outputs 32 and 33 then present the left and right subband signal components respectively, in the subband SBₘ.

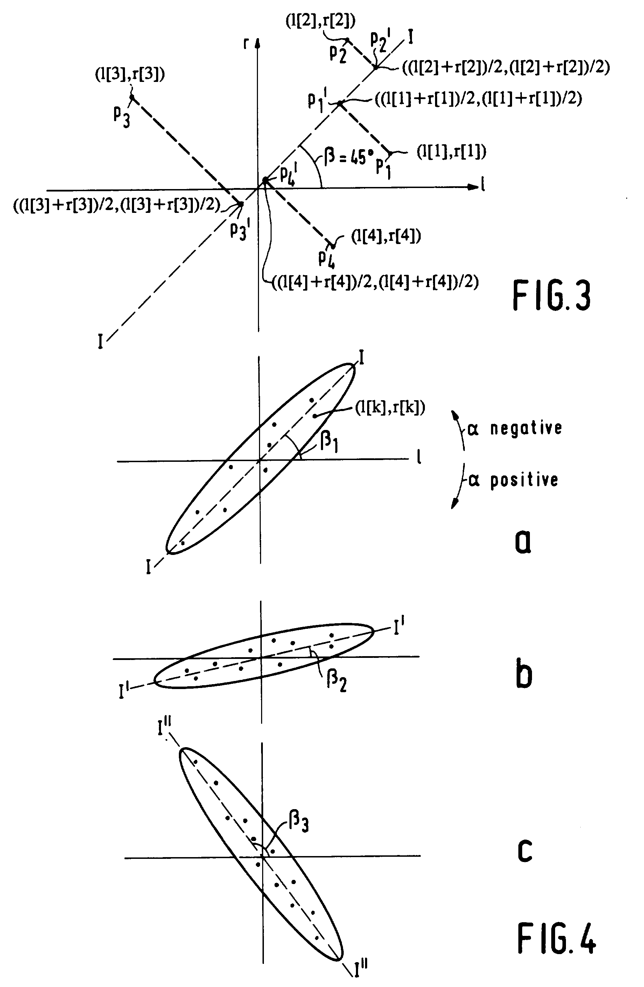

The consequences of the stereo intensity coding at the transmitter end and the corresponding decoding at the receiver end will be explained with reference to Fig. 3.

The samples l[k] and r[k] belonging together in corresponding signal blocks of the left and right subband signal components may be plotted as points in a plane formed by a fictive co-ordinate system, the amplitude l[k] being plotted along one axis of the co-ordinate system and the amplitude r[k] being plotted along the other axis. Fig. 3 shows this co-ordinate system. P₁, P₂, P₃ and P₄ denote four points corresponding to the first four samples that belong together (l[1],r[1]), (l[2],r[2]), (1[3],r[3]) and (l[4),r[4)) in corresponding signal blocks in the left and right signal components of the subband SBₘ. Samples belonging together are added up in the adder 16 to become composite samples l[k]+r[k], divided by two in the divider 17 and transmitted via the transmission medium 23 after being quantized in the quantizer 18. At the receiver end, after dequantization, the composite samples are applied to both multipliers 30 and 31. The samples belonging together and applied to the multipliers 30 and 31 may also be plotted as points in the plane shown in Fig. 3, the amplitude of the sample applied to the multiplier 30 being plotted along the l-axis and the amplitude of the sample applied to the multiplier 31 being plotted along the r-axis. This provides the points P₁', P₂', P₃' and P₄'. The co-ordinates of these points are ((l[k]+r[k])/2,(l[k]+r[k])/2), where k varies from 1 to q. All these points are thus plotted on the dashed line I-I which traverses the origin of the co-ordinate system at an angle β equal to 45°. Fig. 3 makes apparent that the coding of a sample pair l[k],r[k] to a sample in the composite subband signal and the subsequent decoding of this sample narrows down to a projection of the point (l[k],r[k]) on the dashed line I-I in Fig. 3.

For the sample pairs corresponding to the points P₁ and P₂ the coding and subsequent decoding does not cause any difficulties. This is due to the fact that the amplitude of the composite sample is relatively large compared to a specific noise level. The sample pairs corresponding to the points P₃ and P₄ are obtained from samples l[k] and r[k] which also have a relatively large amplitude compared to the noise level. Fig. 3 shows, however, that the projections of these points on the dashed line lead to composite samples having a relatively small amplitude. This amplitude may be so small as to be of the order of the noise level. The multiplication of these composite samples in the multipliers 30 and 31 produces reconstructed samples lᵣ[k] and rᵣ[k] which have a poor signal-to-noise ratio and are thus unreliable.

Thus it has to be concluded that there are situations in which there is good transmission and situations in which there is poor transmission. Good transmission is effected if the samples belonging together of two corresponding signal blocks in the left and right subband signal components lead to q points Pₖ situated in a cloud of points traversed by the dashed line I-I. A similar situation is represented in Fig. 4a. Projections on the line lead to composite samples having an amplitude which is mostly of the same order of magnitude as the amplitude of the original samples. Fig. 4c shows a situation in which the coding and subsequent decoding lead to a poor transmission with much noise being introduced. The cloud of the q points Pₖ = (l[k],r[k]) does not coincide with the line I-I, but is more or less perpendicular to this line. As a result, projections on the line I-I lead to composite samples having amplitudes which are in most cases very small relative to the amplitudes of the original samples.

More generally, the conclusion of this may be that once the line I-I does not optimally traverse the cloud of points, the coding as described above does not lead to good transmission.

For realising good transmission also for the situations in which the cloud of points is not traversed by the line I-I, a coding system is proposed according to the invention, in which a projection is made on a line traversing the cloud of points in the best way possible depending on the position of this cloud of points. This is shown in a diagram in Fig. 4. Fig. 4a shows the situation in which a q-point cloud of points is traversed by the line I-I. The angle β₁ is thus equal to 45°. Fig. 4b shows the situation in which the q-point cloud of points is traversed by the line I'-I' which is at an angle β₂ relative to the l-axis, which angle is smaller than 45°. Fig. 4c shows a q-point cloud of points which is optimally traversed by the line I"-I". The angle β₃ is about 135°.

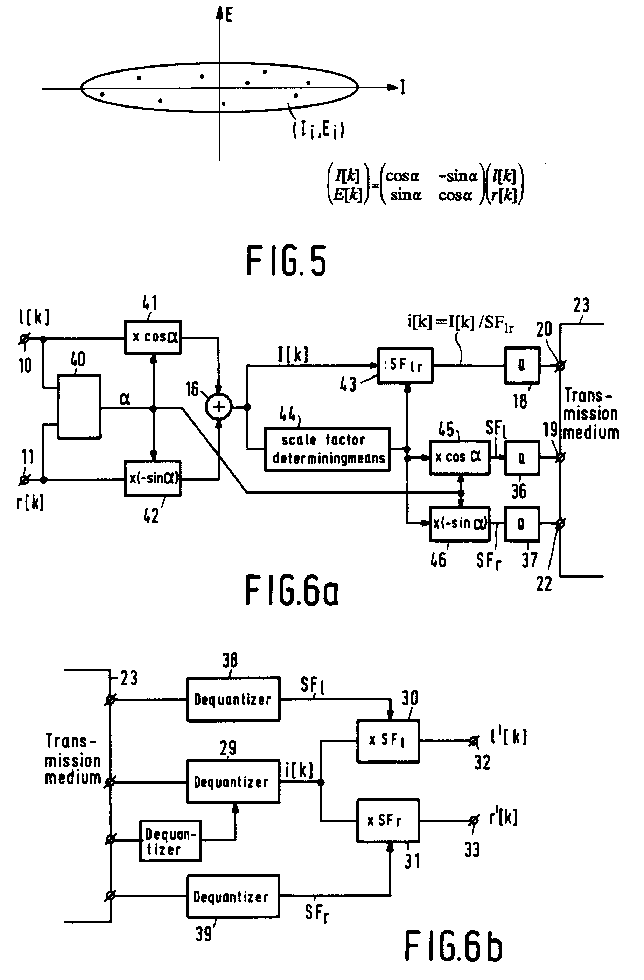

Projections on the lines I-I, I'-I' and I"-I" actually means that a rotation transformation is performed of the q points (l[k],r[k]), so that the l-axis coincides with the relevant line I-I, I'-I' or I"-I". As a result of this transformation the points (l[k],r[k]) in the l-r plane of Figs. 3 and 4 are transformed to the points in an I-E plane as shown in Fig. 5, that is to say, according to the following formula: 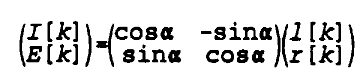
For α it holds that -π/2 < α ≤ π/2.

Fig. 5 shows a cloud of points from one of the Figs. 4a, 4b and 4c after transformation to the I-E co-ordinate system according to the above rotation transformation. The l-axis after rotation coincides with the I-axis and the r-axis coincides after rotation with the E-axis. The transformation of the cloud of points in Fig. 4a to the cloud of points in Fig. 5 means a rotation through an angle α equal to -β₁. The transformation of the cloud of points in Fig. 4b to Fig. 5 means a rotation through an angle α equal to -β₂. The transformation of the cloud of points of Fig. 4c to Fig. 5 means a rotation through an angle α equal to -β₃.

As a result of the rotation, the coding at the transmitter end which was based according to the known method on the projection of the points (l,[k],r[k]) on the line I-I in the l-r co-ordinate system, *cf.* Fig. 3, is now transformed to a coding in the form of a projection of the points (I[k],E[k]) on the I-axis in the I-E co-ordinate system of Fig. 5. According to the invention only the projections of the points (I[k],E[k]) on the I-axis are transmitted *via* the transmission medium. This means that q samples I[k] in a signal block of the composite subband signal are transmitted. The I-axis in Fig. 5 is actually the intensity axis and the E-axis is thus the error axis. The angle α is then selected such that 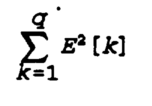 is minimized.

In the system according to the invention the corresponding signal blocks of the first and second subband signal components in a subband are encoded in the intensity mode if the values E[k] obtained after rotation are small enough. This actually means that the error in the intensity coding is to be smaller than a specific value. If the error is too large, the signal blocks are not encoded in the intensity mode but the normal coding system as described in the documents (9a) and (9b) is performed separately on the corresponding signal blocks in the subband signal components of a subband. Another possibility is that in that case both E[k] and I[k] are transmitted. Possible decision criterions for switching the stereo intensity mode on or off are to be discussed at some later instant.

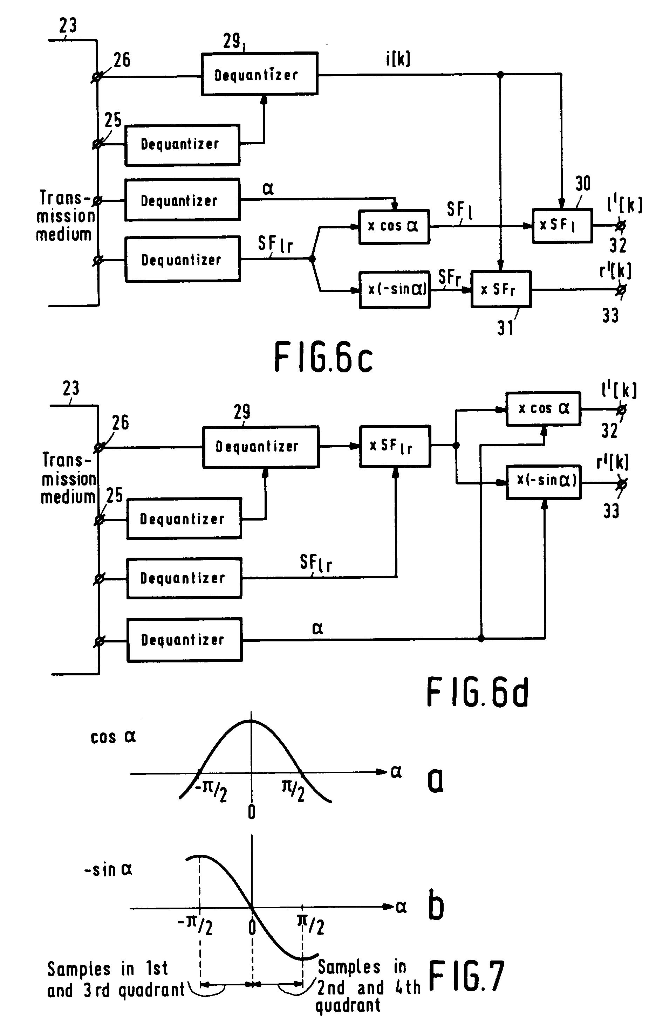

Fig. 6 shows an exemplary embodiment of the system according to the invention which is able to code the subband signal components in a subband in the intensity mode. The inputs 10 and 11 are supplied with the samples l[k] and r[k] respectively, of corresponding signal blocks in the subband signal components. The samples l[k] and r[k] need not first be divided by the scale factors SFₗ and SFᵣ respectively as was the case in the system shown in Fig. 2. The samples l[k] are applied to a unit 40 and a multiplier 41. The samples r[k] are also applied to the unit 40 and to a multiplier 42.

The unit 40 determines, on the basis of the criterion to be discussed hereinafter, whether the relevant subband can be coded in the intensity mode. If this is the case the unit 40 derives the angle α from the samples l[l] to l[q] and r[l] to r[q] of the corresponding signal blocks in the fashion described above. Actually, the unit 40 determines the angle β of the lines I-I, I'-I' and I"-I" in Fig. 4. Within a certain quantization accuracy range α is then equal to -β. For the lines located in the first and third quadrants of the l-r co-ordinate system shown in Fig. 4, such as the lines I-I and I'-I' in Figs. 4a and 4b, this means that a has a negative value. For lines located in the second and fourth quadrants, such as the line I"-I" in Fig. 4, it means that α is positive, that is to say, equal to π-β₃ in the example shown in Fig. 4c.

The unit 40 presents the value for α at an output for the value α to be applied to the multipliers 41 and 42. In the multiplier 41 the samples l[1] to l[q] are multiplied by cosα and in the multiplier 42 the samples r[1] to r[q] are multiplied by -sinα. Outputs of the multipliers 41 and 42 are coupled to corresponding inputs of the adder 16. At the output of the adder 16 then appear the samples I[k] of the composite signal for which holds:$\text{I[k]=l[k]cosα-r[k]sinα}$

These samples are applied to a scale factor determining means 44 and to a divider 43. In the determining means 44 the amplitude of the largest sample in the signal block of the q samples I[1] to I[q] is determined. This amplitude becomes the scale factor SFₗᵣ. In the divider 43 the samples are divided by this scale factor. In the manner already described with respect to Fig. 2 the samples are then quantized in the quantizer 18 and the quantized samples are presented to the transmission medium through the input 20. The output of the unit 40 is furthermore coupled to first inputs of multipliers 45 and 46. The scale factor SFₗᵣ is applied to the second inputs of the multipliers 45 and 46. The multipliers 45 and 46 multiply the scale factor SFₗᵣ by cosα and -sinα respectively. The respective scale factors SFₗ and SFᵣ then appear at the outputs of the multipliers 45 and 46. In customary fashion as already explained with reference to Fig. 2 the scale factors are quantized in the quantizers 36 and 37 and applied to the transmission medium through the inputs 19 and 22. The receiver side in Fig. 6b may in fact be identical with the receiver side in Fig. 2b, and thus means no further explanation.

Instead of transmitting SFₗ and SFᵣ, the scale factor SFₗᵣ and the angle α could be transmitted. At the receiver end, which then naturally looks different from that of Fig. 6b, the scale factors SFₗ and SFᵣ could then be reconstructed from Sfₗᵣ and α. This is diagrammatically shown in Fig. 6c. In Fig. 6c the scale factors SFₗ and SFᵣ are first derived and then multiplied by the composite samples so as to produce the samples in the left and right signal components. Instead, the composite samples could first be multiplied by SFₗᵣ at the receiver end and the samples thus obtained could be multiplied by cosα so as to obtain the left signal component, and by -sinα so as to obtain the right signal component. This is diagrammatically shown in Fig. 6d.

It will be explained hereinafter that the multipliers 45 and 46 produce the scale factors SFₗ and SFᵣ belonging to the original subband signal components.

The transmission medium transmits normalized samples of the composite subband signal which satisfy the formula${\text{i[k] = I[k]/SF}}_{\text{lr}} {\text{= l[k]cosα/SF}}_{\text{lr}} {\text{-r[k]sinα/SF}}_{\text{lr}}$

The coding at the transmitter end is based on the matrix multiplication as represented above. At the receiver end the inverse matrix multiplication is then to be performed according to the following formula 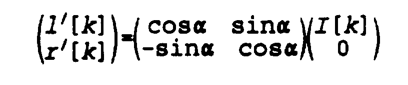 This means for the samples l'[k] at the output 32$\text{l'[k]=I[k].cosα}$$\text{r'[k]=-I[k].sinα}$ In addition, according to the circuit shown in Fig. 6:${\text{l'[k] =i[k].SF}}_{\text{l}} {\text{=I[k].SF}}_{\text{l}} {\text{/SF}}_{\text{lr}}$${\text{r'[k] =i[k].SF}}_{\text{r}} {\text{=I[k].SF}}_{\text{r}} {\text{/SF}}_{\text{lr}}$ This means that the following is to be valid: SFₗ=SFₗᵣ.cosα and SFᵣ=SFₗᵣ.(-sinα). The multipliers 45 and 46 thus really produce the respective values SFₗ and SFᵣ.

Fig. 7 represents the behaviour of cosα and sinα in the region between -π/2 and π/2 and thus the behaviour of the sign of SFₗ and SFᵣ. SFₗᵣ is always a positive number. This means that SFᵣ has a negative value if α is situated between 0 and π/2. This is thus valid in the cases where the cloud of points (l[k],r[k]) is located in the second and fourth quadrants of the co-ordinate system shown in Fig. 4c. The result of this is that at least one sign bit for one of the scale factors is to be transmitted. The format with which the whole data stream is to be transmitted through the transmission medium is then to be taken into consideration. In the document (2b) of the reference list, a suchlike format is described. The scale factors, however, are then coded as positive values and transmitted. For the use of the intensity coding as described hereinbefore, this would imply that an extra bit of, for example, the scale factor SFᵣ will have to be reserved in the data stream, denoting the sign of the scale factor.

Hereinbelow it will be explained how it is determined whether a subband can either or not be coded in the intensity mode.
On the basis of psychoacoustic considerations, the intensity mode can only be used for frequencies over about 1500 Hz. For each subband in this frequency range and for each q-sample signal block in the left and right subband signal components it has to be decided whether this subband is either or not coded in the intensity mode. Two criterions will be discussed.

The first criterion starts from an E[k] which is small relative to the signal energy in the subband concerned. In that case a subband is coded in the intensity mode if 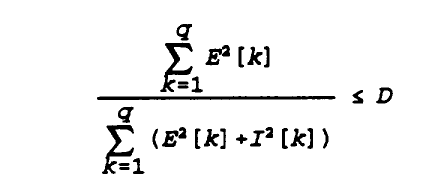 where D is an arbitrary threshold. If this criterion is compared with the situations shown in Fig. 4, it appears that in all the cases that satisfy this criterion, the cloud of points l[k],r[k] has a cigar-like shape. Consequently, after the rotation transformation the magnitudes E[k] are small. In these cases an intensity coding will be permissible. However, if the cloud of points was more circular, an intensity coding would not be permitted.

According to a second criterion, masking may be stated from. There may be derived that the power of the error occurring by omitting the samples E[k] for the left channel is produced by the formula 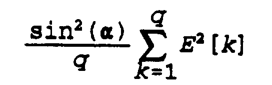 and for the right channel by the formula 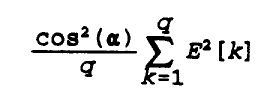 Omission is permitted if the error in the two channels is masked.

For a further description of the function of masking, reference be made to the documents (1), (3), (4), (9a) and (9b).

As observed above, the exemplary embodiment of the system according to the invention means that at least one sign bit for a scale factor is to be transmitted *via* the transmission medium.

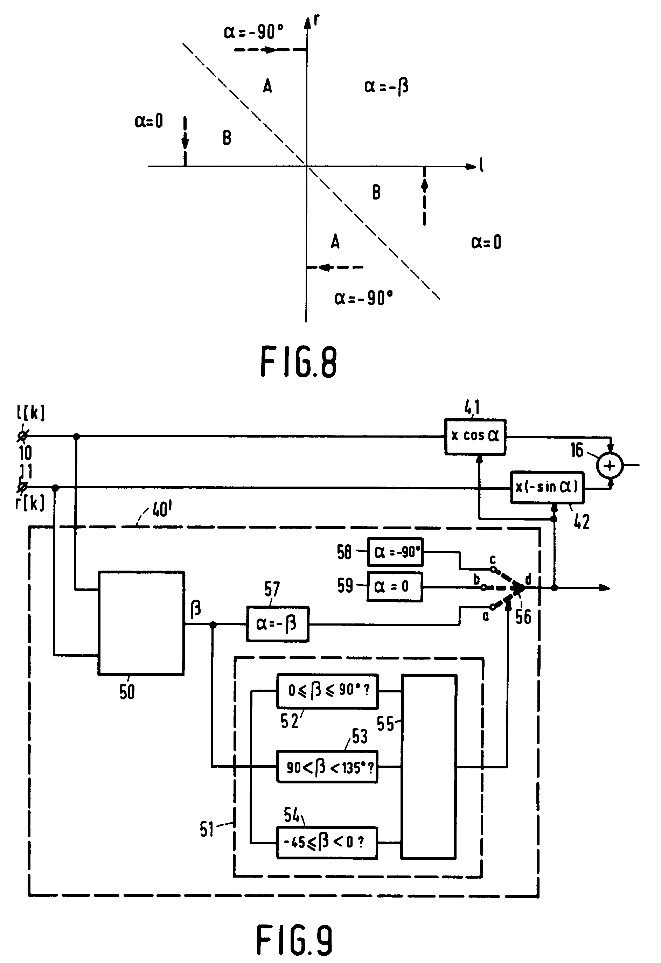

The exemplary embodiment which will be discussed hereinafter renders transmitting the sign bit redundant, whereas yet a better transmission may be realised than with prior-art system shown in Fig. 2. This second exemplary embodiment is based on the system shown in Fig. 6, where an adaptation is realised in the unit 40. In Fig. 9 the section of the system shown in Fig. 6a is located between the inputs 10 and 11 and the adder 16. The unit 40 is shown in more detail in Fig. 9 and referenced by the reference numeral 40'. The unit 40' comprises a block 50 which determines the angle β of the projection lines I-I, I'-I' and I''-I'' in the Figs. 4a, 4b and 4c in above manner. In a comparing unit 51 a detector 52 detects whether β is situated between 0 and 90°. If this is the case, the detector 52 applies a detection signal to the control signal generator 55. A detector 53 in the comparing unit 51 detects whether β is situated between 90 and 135°. If this is the case, the detector 53 applies a detection signal to the generator 55. The detector 54 detects whether β is situated between -45° and 0°. If this is the case, the detector 54 applies a detection signal to the generator 55. In response to the detection signal applied by the detector 52, 53 or 54 to the generator 55, the generator 55 produces first, second or third control signals respectively, to be applied to a control signal input of a controllable switch 56.

In response to the first control signal the switch 56 connects the terminals a and d. This means that a value α equal to -β appears at the output of the unit 40', *cf.* block 57 in the unit 40' where α is assumed to be equal to -β. The first control signal in fact characterizes the situation in which the cloud of points l[k],r[k] is essentially located in the first and third quadrants of the l-r co-ordinate system. This is shown in Fig. 8 by the equation α=-β in the first quadrant. Actually, in this situation the coding is performed as discussed with respect to the system shown in Fig. 6.

In response to the second control signal the switch 56 connects the terminals c and d. Due to the presence of block 58 in the unit 40', which in this case is coupled to the output of the unit 40', a value for a equal to -90° appears at this output. The second control signal characterizes the situation in which a cloud of points l[k],r[k] is in essence located in the parts of the plane in Fig. 8 denoted by the letters A. Because α is in this case assumed to be equal to -90°, this means that a coding of these points is performed by way of a projection on the r-axis, and that only these projections are transmitted *via* the transmission medium as the samples of the composite subband signal. This immediately becomes apparent from Fig. 9 because samples I[k] for which holds$\text{I[k]=r[k]}$ appear at the output of the adder after multiplication in the multipliers 41 and 42 and addition in the adder 16.

Another description of what happens here, which description is more in the line of the description with respect to Figs. 4 and 5, is that the cloud of points is rotated through 90° and the projections are performed on the l-axis. These projections are then transmitted.

Furthermore, Fig. 8 clarifies that this coding produces a better transmission than the coding described for the system shown in Fig. 2. The projection on the r-axis shown in Fig. 8 produces a better approximate of the original samples than the projection on the line I-I in Fig. 3.

In response to the third control signal the switch 56 connects the terminals b and d. Due to the presence of the block 59 in the unit 40', which is in this case coupled to the output of the unit 40', a value for α equal to 0° appears at this output. The third control signal characterizes a situation in which the cloud of points l[k],r[k] is essentially located in the parts of the plane shown in Fig. 8 referenced B. Because α is in this case assumed to be equal to 0°, this means that a coding of the points is performed in the form of a projection on the l-axis and that only these projections are transmitted *via* the transmission medium as samples of the composite subband signal. This is immediately clear from Fig. 9 because, after the multiplication in the multipliers 41 and 42 and addition in the adder 16, samples I[k] appear at the output of the adder 16 for which holds:$\text{I[k]=l[k]}$ Fig. 8 furthermore clarifies that this coding produces a better transmission than the coding described with respect to the system shown in Fig. 2. The projection on the l-axis as shown in Fig. 8 produces a better approximate of the original samples than the projections on the line I-I in Fig. 3.

If the samples are coded in the fashion described with reference to Figs. 8 and 9, this means that there are no special adaptations at the receiver end. The receiver may thus look just like the receiver shown in Fig. 6.

Hereinafter, a manner for determining the scale factors SFₗ and SFᵣ will be discussed which can be used in the system according to the invention as discussed above, but also in systems according to the state of the art which are capable of applying an intensity mode coding to the left and right signal components of a subband. This is based on the requirement that the reconstructed signal at the receiver ed is to have the same power as the original signal. This implies that the following equality is to hold: 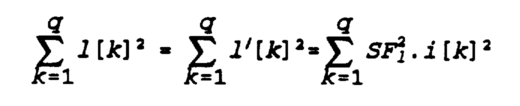 and thus: 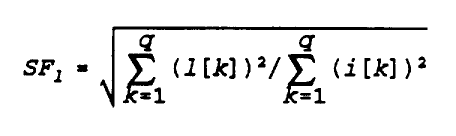 Similarly, one finds for SFᵣ

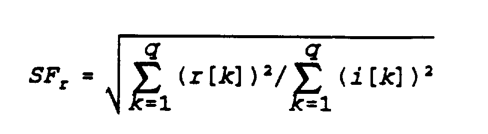

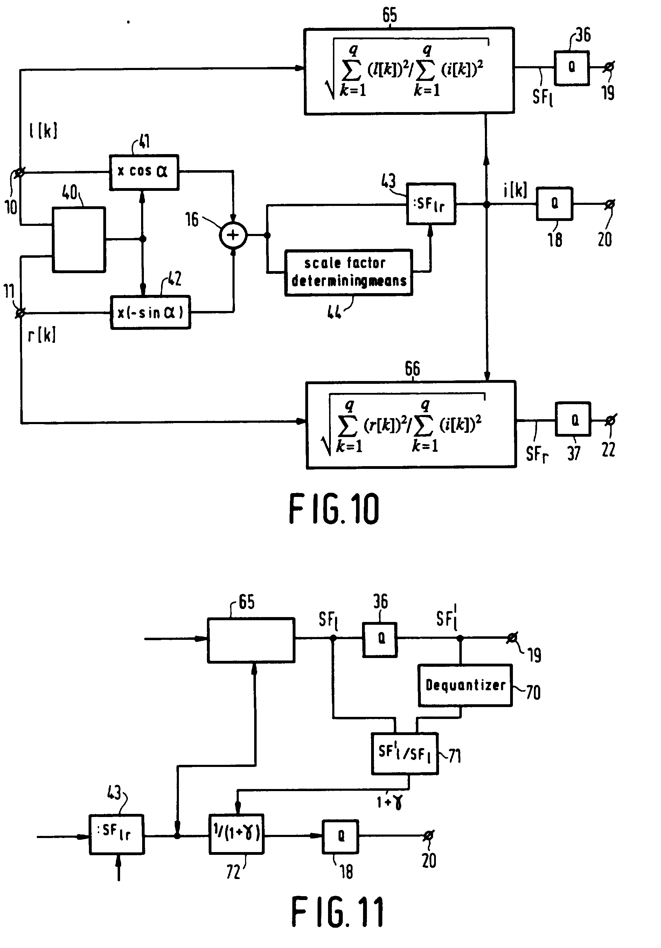

Fig. 10 shows this measure implemented in the transmitter according to the invention. Fig. 10 shows only the relevant transmitter section of the system shown in Fig. 6a. In Fig. 6a the scale factors were determined in the units 45 and 46. These units are omitted in the exemplary embodiment of Fig. 10 and replaced by the units 65 and 66. A first input of the unit 65 is coupled to the input terminal 10 through which the unit 65 is supplied with the samples l[1] to l[q] in a signal block. A second input is coupled to the output of the divider 43, so that the unit 65 is supplied with the composite samples i[1] to i[q] through this second input. Unit 65 is capable of computing the scale factor SFₗ from these input signals with the aid of above formula. A first input of the unit 66 is coupled to the input terminal 11 and a second input is coupled to the output of the divider 43. The unit 66 computes the scale factor SFᵣ on the basis of the signals supplied through these inputs.

This correction is again implemented in Fig. 11 in a system according to the invention such as the one described, for example, in Fig. 6 or 10. However, it should be observed in this respect that this correction may also be used in systems according to the state of the art which are capable of applying an intensity mode coding to the left and right signal components of a subband.

A further item worth mentioning is the quantization of the scale factors in the quantizers 36 and 37. It may happen as a result of quantization in the quantizer 36 that the quantized scale factor SFₗ has a value slightly deviating from the real value for the scale factor. Represented in a formula, the following would then hold:${\text{SF'}}_{\text{l}} {\text{= (1+γ).SF}}_{\text{l}}$ where SF'ₗ is the value of the quantized scale factor SFₗ.
As a result, the power of the left subband signal at the receiver end is changed by a factor of (1+γ). Since one wishes to fulfil the requirement that the power of the left subband signal component at the transmitter and receiver ends is the same, the samples i[k] at the transmitter end are first to be divided by (1+γ). The relevant section of the system which is capable of making corrections for the other value of the quantized scale factor SFₗ is represented in Fig. 11. For this application at least one sign bit for one of the scale factors is to be determined as described hereinbefore with reference to Fig. 6a. This sign bit may then be added to the associated scale factors after which transmission may be effected. The output of the quantizer 36 is coupled to the input of a dequantizer 70 in which the quantized scale factor SFₗ is again dequantized. The dequantizer thus produces a value SF'ₗ of the quantized scale factor SFₗ. The outputs of the dequantizer 70 and the unit 36 are coupled to inputs of a divider 71 in which a division of SF'ₗ/SFₗ is performed for obtaining the value 1+γ. This value is applied to a divider 72 inserted between the divider 43 and the quantizer 18. In the divider 72 the samples i[k] are divided by the value 1+γ. In this fashion a compensation is made for the quantizing error resulting from the quantization of the scale factor SFₗ. As a result of this correction the power in the left channel remains constant.

In the right channel an error has developed in the power, which error, expressed in dB, is equal to the maximum quantization step size (in dB) in the scale factors. A compensation for the quantization error, which error occurs as a result of the quantization of the scale factor SFᵣ, could naturally be made in the manner as described above for the left channel. This again would mean that an error is developed in the transmitted left subband signal component.

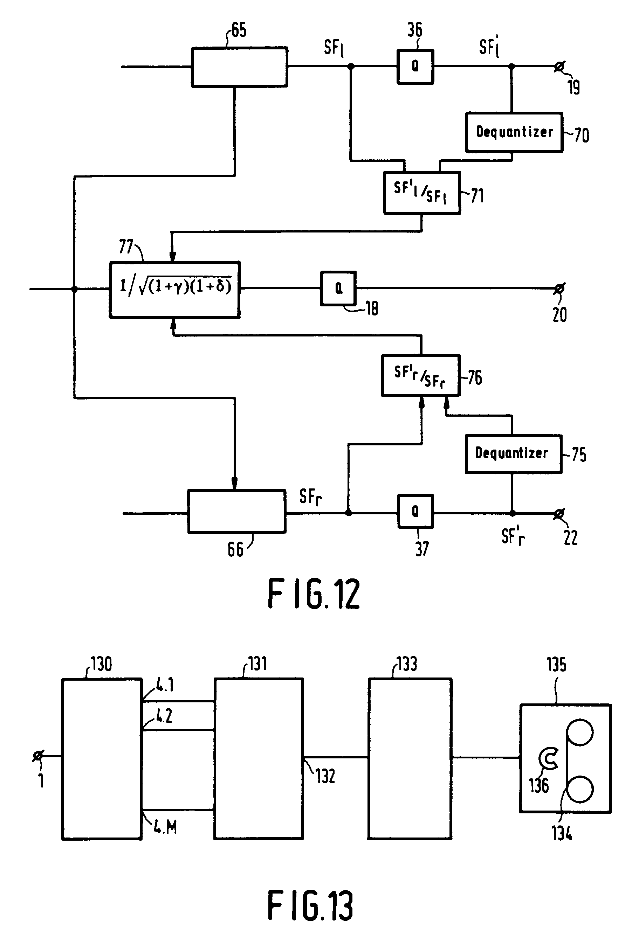

Fig. 12 shows an exemplary embodiment in which the quantization error in SFₗ as well as the quantization error in SFᵣ are taken into consideration. Therefore, the system shown in Fig. 12 comprises a dequantizer 75, a divider 76 and a divider 77. In the divider 76 the value (1+δ) is determined for which holds:${\text{(1+δ)=SF'}}_{\text{r}} {\text{/SF}}_{\text{r}}$ In the divider 77 the samples i[k] are then divided by the value$\sqrt{\text{(1+γ)(1+δ)}}$ In this case a compromise is reached so that corrections are made at least partly for the quantization errors in the scale factors in both channels.

This measure is also applicable to aforementioned state-of-the-art systems.

A still further possibility would be to detect for each signal block of the left signal component and the corresponding signal block of the right subband signal component which of the two signal blocks is louder, and correct the scale factor belonging to the subband signal component which is the louder in accordance with the method shown in Fig. 11.

More generally, this means that the correction factor in the unit 77 is a function of the values (1+γ) and (1+δ), which function may then further be determined by the value of the scale factors and/or the energies of the two signal components.

A more general formula for the correction factor could be:${\text{{(1+γ)}}^{\text{L}} {\text{(1+δ)}}^{\text{R}} {\text{}}}^{\text{1/(L+R)}}$ where L and R stand for either SFₗ and SFᵣ, or for the energies in the left and right subband signal components respectively. It is clear that for L=R this formula is simplified to aforementioned formula for the correction factor.

Fig. 13 shows the use of the subband coder as described hereinbefore, in a transmitter, more particularly, a transmitter in the form of a recording device for recording the quantized subband signals in one or more tracks on a magnetic record carrier.

The section referenced 130 is the afore-discussed subband coder presenting the quantized subband signals at the outputs 4.1 to 4.M.

For each subband m, the first and second subband signal components being processed seperately, the output 4.M actually covers two separate outputs at which the quantized subband signal components are presented. Alternatively, it is possible for the q quantized samples of two corresponding signal blocks in the first and second signal components of the subband m to be presented consecutively at the output 4.m.

For this subband m processed in the intensity mode, the quantized composite subband signal is presented at an output 4.m. Furthermore, two quantized scale factors SF'ₗ and SF'ᵣ for each subband are presented at an output of the section 130. Allocation information for each subband is likewise presented at an output of the section 130. For a subband m, for which the first and second subband signal components are processed separately, the allocation information is thus generated for each subband signal component. Thus, for a subband m processed in the intensity mode, only the allocation information is generated for the quantized composite subband signal.

The section referenced 131 converts all these signals and includes these signals in a second digital signal to be presented at the output 132. This second digital signal is constituted by successive frames whose format is extensively discussed in prior-art documents (2a) and (2b). Also the structure of the block 131 is explained in these documents.

The section referenced 133 renders the second digital signal suitable for recording on a record carrier, for example, a magnetic record carrier 134. The unit 133 thereto comprises an 8-to-10 converter. In such a converter 8-bit data words in the serial information stream are converted to 10-bit codewords. Interleaving may also be effected. All this is aimed at making an error correction of the received information possible at the receive end (when the record carrier is reproduced).

The output signal of block 133 is applied to write means 135 by which the signal is recorded in one or more longitudinal tracks on the record carrier 134. The write means 135 thereto comprise one or more write heads 136.

For a further explanation of the system shown in Fig. 13 reference be made to prior-art document (8) which is also considered included in this Application where deemed necessary.

It should further be observed that the invention is not restricted only to the exemplary embodiments shown. Various modifications of the exemplary embodiments described are possible without deviating from the invention as defined in the claims.

### Reference list

(1) European patent application No. 289 080 (PHN 12.108)
(2a) Dutch patent application No. 89.01.401 (PHN 12.967)
(2b) Dutch patent application No. 90.00.338 (PHN 13.241)
(3) EBU Techn. Review No. 230, Aug. 1988
   G. Theile et al "Low bit rate coding of high-quality audio signals. An introduction to the MASCAM system".
(4) Philips Journal of Research 44,329-343, 1989
   R.N.J. Veldhuis et al. "Subband coding of digital audio signals".
(5) IEEE ICASSP 80, Vol. 1, 327-331, April 9-11, 1980
   M.A. Krasner "The critical band coder ... Digital encoding of speech signals based on the perceptual requirements of the auditory system".
(6) F.J. MacWilliams et al, "The theory of error correcting codes", North Holland publishing comp. 1983
(7) European patent application No. 89 201 408.5 (PHQ 89.018)
(8) Dutch patent application No. 90.00.635 (PHN 13.281)
(9a) Dutch patent application No. 90.01.127 (PHN 13.328)
(9b) Dutch patent application No.90.01.128 (PHN 13.329)

## Claims

1. Coding system, comprising a subband coder for subband coding of a wideband digital signal, for example, a digital stereo audio signal, constituted by at least first and second signal components which are sampled each with a specific sampling frequency Fₛ, the subband coder including signal splitting means (LP,BP,HP,9) for generating, in response to the wideband digital signal, a number of M subband signals by means of a sampling frequency reduction, for which purpose the splitting means split up the wideband signal into successive subbands having band numbers m which augment with frequency, where 1 ≤ m ≤ M, and in which each subband signal is constituted by at least first and second subband signal components, the coding system further including quantizing means (Q1,...Qm) for quantizing block-by-block the first and second subband including quantizing means for quantizing block-by-block the first and second subband signal components in a subband SBₘ, a quantized subband signal component comprising successive signal blocks, each signal block containing q samples, the q samples in corresponding signal blocks of the first and second quantized subband signal components in the subband SBₘ being represented by nₘ₁ and nₘ₂ bits respectively, and in which in an intensity mode coding for at least one of the subbands the quantizing means (16,17,18) are arranged for combining corresponding samples of the first and second subband signal components in the subband so as to obtain a composite signal in the subband, and are arranged for quantizing block-by-block the composite signal in the subband, the quantized composite signal in the subband being constituted by successive signal blocks, each signal block containing q samples where the q samples in a signal block of the quantized composite signal are represented each by n_{mc} bits, the system further including scale factor information determining means (12,13) for determining information related to a scale factor belonging to each q-sample signal block in the first and second subband signal components of the subbands, characterized in that the system comprises angle determining means (40') arranged for determining a straight line (I-I) in a plane formed by a fictive rectangular co-ordinate system having two orthogonal axes (l,r), for each of the subband for which an intensity mode coding is possible and for corresponding signal blocks in the first and second subband signal components of such a subband, the line traversing the origin of the coordinate system and traversing a point cloud of q points (l[k],r[k]) in the plane, which points are formed by combining the k^{th} sample from a q-sample signal block in the first subband signal component with the k^{th} sample from the corresponding q-sample signal block in the second subband signal component, where k varies from 1 to q, and, for determining the k^{th} point in the plane, by plotting the k^{th} sample of the first subband signal component along one axis of the co-ordinate system and the k^{th} sample of the second subband signal component along the other axis, and in that for the line it holds that a distance measure which is a measure of the distance from the line to all the q points is minimum, in that the angle determining means (40') are further arranged for determining an angle β in essence equal to the angle formed by the line and the axis of the co-ordinate system along which the samples of the first subband signal component are plotted, in that the angle determining means comprise a comparator (in 50) for comparing the distance measure with a threshold, in that the comparator is arranged for generating a control signal if the distance measure does not exceed the threshold, and in that the quantizing means are arranged for performing an intensity mode coding of the corresponding signal blocks in the first and second subband signal components of the relevant subband in response to the control signal, and in that the quantizing means to this end comprise signal combining means (16,41,42) for multiplying the q samples of the first subband signal component by cos(α), for multiplying the q corresponding samples of the second subband signal component by -sin(α) and for combining subsequent to the multiplication the corresponding samples of the q-sample first and second subband signal components to become the composite subband signal, and in that α has a relation to the angle β.

2. Coding system as claimed in Claim 1, characterized in that α = -β.

3. Coding system as claimed in Claim 1, characterized in that for the case where β satisfies the condition of 0 ≤ β ≤ 90°, it holds that α = -β, in that for the case where β satisfies the condition of 90° < β < 135°, it holds that α = -90°, and in that for the case where β satisfies the condition of -45° < β < 0, it holds that α = 0°.

4. Coding system as claimed in Claim 3, characterized in that for the case where β is equal to 135° it holds that α = -90°.

5. Coding system as claimed in Claim 3, characterized in that for the case where β = -45° it holds that α = 0°.

6. Coding system as claimed in one of the preceding Claims, characterized in that the signal combining means comprise first multiplying means (41) for multiplying q samples of the first subband signal component by cos α, second multiplying means (42) for multiplying the q samples of the second subband signal component by -sin α, and summing means (16) for summing the output signals of the first and second multiplying means.

7. Coding system as claimed in one of the preceding Claims, characterized in that the scale factor information determining means are arranged for determining the sample in the q-sample signal block in the composite subband signal having the largest amplitude, and in that the quantizing means comprise a divider (43) for dividing the q samples by a composite scale factor (SFₗᵣ) prior to the quantization of these q samples of the signal block in a composite subband signal, the composite scale factor corresponding to the amplitude of the sample having the largest amplitude.

8. Coding system as claimed in Claim 7, characterized in that for determining the scale factor (SFₗ) belonging to the corresponding signal block of the first subband signal component of which the composite subband signal is composed the determining means (43,44,45) are arranged for multiplying composite scale factor by cos α, and in that for determining the scale factor (SFᵣ) belonging to the corresponding signal block of the second subband signal component of which the subband signal is composed, the determining means (43,44,46) are arranged for multiplying the composite scale factor by (-sinα).

9. Coding system as claimed in one of the preceding Claims, characterized in that the distance measure is equal to an error value which is equal to the sum of the squares of the q lengths of the q perpendiculars on said line (I-I).

10. Coding system as claimed in Claim 7, characterized in that for determining the scale factor belonging to the corresponding signal block of the first subband signal component of which the composite subband signal is composed, the determining means are arranged for calculating the magnitude${\text{SF}}_{\text{lr}} \sqrt{{\text{S}}_{\text{11}} {\text{/S}}_{\text{2}}}$ where S₁₁ is equal to the sum of the squares of the amplitudes of the q samples in the signal block of the first subband signal component, S₂ is equal to the sum of the squares of the q samples in the signal block of the composite subband signal, and SFₗᵣ is the amplitude of the largest sample in the q-sample signal block in the composite subband signal.

11. Coding system as claimed in one of the preceding Claims, characterized in that the scale factor information determining means comprise
- second quantizing means (36) for quantizing the scale factor (SFₗ) which belongs to the corresponding signal block of the first and/or second subband signal component of which the composite subband signal is composed,
- dequantizing means (70) for dequantizing the scale factors quantized in the second quantizing means, and
- dividing means (71) for dividing the scale factor and the dequantized scale factor into one another so as to obtain a coefficient, and in that the quantizing means comprise multiplier means (72) for multiplying the q samples of the composite subband signal by the coefficient.

12. Coding system as claimed in Claim 11, characterized in that the coefficient is equal to SFₗ/SF'ₗ, where SFₗ is the scale factor belonging to the corresponding signal block of the first subband signal component of which the composite subband signal is composed and SF'ₗ is the value of the quantized scale factor SFₗ subsequent to dequantization.

13. Coding system as claimed in Claim 11, characterized in that the coefficient is equal to SFᵣ/SF'ᵣ, where SFᵣ is the scale factor belonging to the corresponding signal block of the second subband signal component of which the composite subband signal is formed and SF'ᵣ is the value of the quantized scale factor SFᵣ subsequent to dequantization.

14. Coding system as claimed in Claim 11, characterized in that the coefficient is a function of${\text{SF'}}_{\text{l}} {\text{/ SF}}_{\text{l}} \text{and} {\text{SF'}}_{\text{r}} {\text{/ SF}}_{\text{r}}$ where SFₗ and SFᵣ are the scale factors belonging to the corresponding signal blocks of the first and second subband signal component respectively, of which the composite subband signal is composed, and SF'ₗ and SF'ᵣ are the values of the quantized scale factors SFₗ and SFᵣ subsequent to dequantization.

15. Coding system as claimed in Claim 14, characterized in that the coefficient is equal to$\sqrt{{\text{SF}}_{\text{l}} {\text{SF}}_{\text{r}} \text{/} {\text{SF'}}_{\text{l}} {\text{SF'}}_{\text{r}}}$

16. Transmitter comprising a coding system as claimed in one of the preceding Claims.

17. Transmitter as claimed in Claim 16, characterized in that the transmitter has the form of a device for recording quantized subband signals in a track on a record carriers (134).

18. Transmitter as claimed in Claim 17, characterized in that the record carrier is a magnetic record carrier (134).

19. Transmitter as claimed in one of the Claims 16, 17 or 18 for transmitting the composite subband signal and the scale factor information in an intensity mode for at least one of the subbands, which transmitter comprises a coding system as claimed in Claim 7, characterized in that the transmitter is further arranged for transmitting for each signal block the scale information in the form of a composite scale factor (SFₗᵣ) corresponding to the amplitude of the sample having the largest amplitude in the signal block and the value of α.

20. Receiver for receiving the composite subband signal and the scale factor information transmitted by the transmitter as claimed in Claim 19, characterized in that the receiver comprises first and second multipliers (fig 6c) for multiplying the composite scale factor (SFₗᵣ) by cos α or (-sin α) respectively, so as to obtain the scale factor belonging to the first or second subband signal component respectively, and includes third and fourth multipliers (30,31) for multiplying the samples of the composite subband signal by the associated scale factor so as to obtain the first or second subband signal component respectively.

21. Receiver for receiving the composite subband signal and the scale factor information transmitted by the transmitter as claimed in Claim 19, characterized in that the receiver comprises a first multiplier (fig 6d) for multiplying the composite subband signal by the composite scale factor, and second and third multipliers for multiplying the signal thus obtained by cos α or (-sin α) respectively, so as to obtain the first or second subband signal component respectively.

22. Transmitter as claimed in one of the Claims 16, 17 or 18, for transmitting the composite subband signal and the scale factor information in an intensity mode for at least one of the subbands, characterized in that the transmitter is arranged for transmitting for each signal block the scale factor information in the form of a first scale factor belonging to the first subband signal component and a second scale factor belonging to the second subband signal component, and at least one sign bit belonging to either scale factor.

23. Receiver for receiving a transmitted signal comprising the composite subband signal and the scale factor information, as transmitted by the transmitter as claimed in claim 22, the scale factor information comprising first and second scale factors and at least one sign bit belonging to either scale factor, characterized in that the receiver comprises retrieval means for retrieving the composite signal, the scale factors and the at least one sign bit from the transmitted signal, multiplier means (30,31) for multiplying the samples of the composite subband signal by the associated scale factor so as to obtain the first or the second subband signal component respectively, the multiplier means (30,31) being adapted control the sign of the samples of one of the first or the second subband signal component in response to the at least one sign bit.

24. Receiver as claimed in one of the Claims 20, 21 and 23, characterized in that the receiver has the structure of a system for reading information from a track on a record carrier (134).

25. Receiver as claimed in Claim 24, characterized in that the record carrier (134) is a magnetic record carrier.

26. Coding method for subband coding of a wideband digital signal, for example, a digital stereo audio signal, constituted by at least first and second signal components which are sampled each with a specific sampling frequency Fₛ, the coding method comprising the steps of
- splitting the wideband digital signal for generating a number of M subband signals by means of a sampling frequency reduction, for which purpose the wideband signal is split up into successive subbands having band numbers m which augment with frequency, where 1 ≤ m ≤ M, and in which each subband signal is constituted by at least first and second subband signal components, the coding method further including the steps of
- quantizing block-by-block the first and second subband signal components in a subband SBₘ, a quantized subband signal component comprising successive signal blocks, each signal block containing q samples, the q samples in corresponding signal blocks of the first and second quantized subband signal components in the subband SBₘ being represented by nₘ₁ and nₘ₂ bits respectively,
- determining scale factor information relating to a scale factor belonging to each q-sample signal block in the first and second subband signal components of the subbands, and in which in an intensity mode coding for at least one of the subbands the coding method further comprises the step of
- combining corresponding samples of the first and second subband signal components in the subband so as to obtain a composite signal in the subband, and quantizing block-by-block the composite signal in the subband, the quantized composite signal in the subband being constituted by successive signal blocks, each signal block containing q samples where the q samples in a signal block of the quantized composite signal are represented each by n_{mc} bits,
characterized in that the method further comprises the step of determining a straight line in a plane formed by a fictive rectangular co-ordinate system having two orthogonal axes, for each of the subbands for which an intensity mode coding is possible and for corresponding signal blocks in the first and second subband signal components of such a subband, the line traversing the origin of the co-ordinate system and traversing a point cloud of q points in the plane, which points are formed by combining the k^{th} sample from a q-sample signal block in the first subband signal component with the k^{th} sample from the corresponding q-sample signal block in the second subband signal component, where k varies from 1 to q, and, determining the k^{th} point in the plane, by plotting the k^{th} sample of the first subband signal component along one axis of the co-ordinate system and the k^{th} sample of the second subband signal component along the other axis, and determining the line such that a distance measure which is a measure of the distance from the line to all the q points is minimum, and determining an angle β in essence equal to the angle formed by the line and the axis of the co-ordinate system along which the samples of the first subband signal component are plotted, comparing the distance measure with a threshold, generating a control signal if the distance measure does not exceed the threshold, and performing an intensity mode coding of the corresponding signal blocks in the first and second subband signal components of the relevant subband in response to the control signal, and combining the first and second signal components by multiplying the q samples of the first subband signal component by cos(α), multiplying the q corresponding samples of the second subband signal component by -sin(α) and combining subsequent to the multiplication the corresponding samples of the q-sample first and second subband signal components to become the composite subband signal, and in that α has a relation to the angle β.

## Patentansprüche

1. Codiereinrichtung mit einem Teilbandcodierer zum Teilbandcodieren eines digitalen Breitbandsignals, beispielsweise eines digitalen Stereo-Tonsignals, das durch wenigstens einen ersten und einen zweiten Signalanteil gebildet wird, die je mit einer spezifischen Abtastfrequenz Fₛ abgetastet werden, wobei der Teilbandcodierer Signalspaltmittel (LP, BP, HP, 9) aufweist zum in Antwort auf das breitbandige digitale Signal Erzeugen einer Anzahl von M Teilbandsignalen mit Abtastfrequenzverringerung, wozu die Spaltmittel das breitbandige digitale Signal in aufeinanderfolgende Teilbänder mit Bandnummern m aufteilen, die mit der Frequenz zunehmen, wobei 1 ≤ m ≤ M, und wobei jedes Teilbandsignal aus wenigstens einem ersten und einem zweiten Teilbandsignalteil aufgebaut ist, wobei die Codiereinrichtung weiterhin Quantisiermittel (Q₁, ... Qₘ) aufweist zum blockweisen Quantisieren der ersten und zweiten Teilbandsignalteile eines Teilbandsignals in einem Teilband SBₘ, wobei ein quantisierter Teilbandsignalteil aus aufeinanderfolgenden Signalblöcken aufgebaut ist, wobei jeder Signalblock q Abtastwerte aufweist, wobei die q Abtastwerte in einem Signalblock des ersten oder des zweiten quantisierten Teilbandsignalteils in einem Teilband SBₘ, je mit nₘ₁ bzw. nₘ₂ Bits dargestellt sind, und wobei in einer Codierung in einer Intensitätsmode für wenigstens eines der Teilbänder die Quantisiermittel (16, 17, 18) zum Zusammennehmen entsprechender Abtastwerte des ersten und des zweiten Teilbandsignalteils in dem Teilband eingerichtet sind zum Erhalten eines zusammengesetzten Signals in dem Teilband, und zum blockweisen Quantisieren des zusammengesetzten Signals in dem Teilband eingerichtet sind, wobei das quantisierte zusammengesetzte Signal in dem Teilband aus aufeinanderfolgenden Signalblöcken aufgebaut ist, wobei jeder Signalblock q Abtastwerte aufweist, wobei die q Abtastwerte in einem Signalblock des quantisierten zusammengesetzten Signals je durch n_{mc} Bits dargestellt werden, wobei die Einrichtung weiterhin Skalenfaktorinformationsbestimmungsmittel (12, 13) aufweist zum Bestimmen von Information, die sich auf einen Skalenfaktor bezieht, der jedem Signalblock von q Abtastwerten in dem ersten und zweiten Teilbandsignalteilen der Teilbänder zugeordnet ist, dadurch gekennzeichnet, daß sie mit Winkelbestimmungsmitteln (40') versehen ist, die dazu eingerichtet sind, für jedes derjenigen Teilbänder, für die eine Codierung in der Intensitätsmode möglich ist und für jeweils entsprechende Signalblöcke in den ersten und zweiten Teilbandsignalteilen eines derartigen Teilbandes, eine gerade Linie (I-I) in einer Ebene zu bestimmen, die durch ein fiktives rechteckiges Achsenkreuz mit zwei senkrecht aufeinander stehenden Achsen (l, r) gebildet ist, wobei diese Linie durch den Ursprung des Achsenkreuzes und durch eine Punktewolke von q Punkten (l[k], r[k]) in der Ebene geht, wobei diese Punkte dadurch gebildet werden, daß ein k. Abtastwert aus einem Signalblock von q Abtastwerten in dem ersten Teilbandsignalteil mit dem k. Abtastwert aus dem entsprechenden Signalblock von q Abtastwerten in dem zweiten Teilbandsignalteil, wobei k sich von 1 bis einschließlich q erstreckt, zusammengenommen wird, und dadurch, daß zum Bestimmen eines k. Punktes in der Ebene der k. Abtastwert des ersten Teilbandsignalteils auf der einen Achse des Achsenkreuzes und der k. Abtastwert des zweiten Teilbandsignalteils auf der anderen Achse des Achsenkreuzes aufgetragen wird, und daß für die Linie gilt, daß ein Distanzmaß, das ein Maß für den Abstand der Linie von allen q Punkten ist, minimal ist, daß die Winkelbestimmungsmittel (40') weiterhin dazu eingerichtet sind, einen Winkel β zu bestimmen, der im wesentlichen dem Winkel entspricht, den diese Linie mit derjenigen Achse des Achsenkreuzes einschließt, auf der die Abtastwerte des ersten Teilbandsignalteils aufgetragen sind, daß die Winkelbestimmungsmittel mit einer Vergleichsschaltung (in 50) versehen sind zum Vergleichen des Distanzmaßes mit einem Schwellenwert, daß die Vergleichsschaltung zum Erzeugen eines Steuersignals eingerichtet ist, wenn das Distanzmaß den Schwellenwert nicht überschreitet, und daß die Quantisiermittel dazu eingerichtet sind, um in Antwort auf das Steuersignal eine Codierung in der Intensitätsmode an den entsprechenden Signalblöcken in dem ersten und dem zweiten Teilbandsignalteil des betreffenden Teilbandes durchzuführen, und daß die Quantisiermittel dazu mit Signalkombiniermitteln (16, 41, 42) versehen sind, zum Multiplizieren der q Abtastwerte des ersten Teilbandsignalteils mit cos (α), zum Multiplizieren der q entsprechenden Abtastwerte des zweiten Teilbandsignalteils mit -sin (α) und zum Kombinieren nach der Multiplikation der q Abtastwerte des ersten und des zweiten Teilbandsignalteils zu dem zusammengesetzten Teilbandsignal, und daß α eine Beziehung zu dem Winkel β hat.

2. Codiereinrichtung nach Anspruch 1, dadurch gekennzeichnet, daß α = -β ist.

3. Codiereinrichtung nach Anspruch 1, dadurch gekennzeichnet, daß in dem Fall, wo β der Bedingung 0 ≤ β ≤ 90° erfüllt, gilt, daß α = -β ist, daß in dem Fall, wo β der Bedingung entspricht: 90° < β < 135°, gilt, daß α = -90° ist, und daß in dem Fall, wo β der nachfolgenden Bedingung entspricht: - 45° < β < 0, gilt, daß α = 0° ist.

4. Codiereinrichtung nach Anspruch 3, dadurch gekennzeichnet, daß in dem Fall, wo β gleich 135° ist, gilt, daß α = -90° ist.

5. Codiereinrichtung nach Anspruch 3, dadurch gekennzeichnet, daß in dem fall, wo β = -45° ist, gilt, daß α = 0° ist.

6. Codiereinrichtung nach einem der vorstehenden Ansprüche, dadurch gekennzeichnet, daß die Signalkombiniermittelmit ersten Multipliziermitteln (41) versehen sind, zum Multiplizieren von q Abtastwerten des ersten Teilbandsignalteils mit cos (α), mit Multipliziermitteln (42) zum Multiplizieren der q entsprechenden Abtastwerte des zweiten Teilbandsignalteils mit -sin (α) und mit Summiermitteln (16) zum Summieren der Ausgangssignale der ersten und der zweiten Multipliziermittel.

7. Codiereinrichtung nach einem der vorstehenden Ansprüche, dadurch gekennzeichnet, daß sie Skalenfaktorinformationsbestimmungsmittel aufweist zum Bestimmen desjenigen Abtastwertes in dem q-Abtastwertesignalblock in dem zusammengesetzten Teilbansignal, der die größte Anmplitude hat, und daß die Quantisiermittel einen TYeiler (43) aufweisen zum teilen der q Abtastwerte durch einen zusammengesetzten Skalenfaktor (SFₗᵣ), wobei vor der Quantisierung dieser q Abtastwerte des Signalblocks in einem zusammengesetzten Teilbandsignal der zusammengesetzte Skalenfaktor der Amplitude des Abtastwertes mit der größten Amplitude entspricht.

8. Codiereinrichtung nach Anspruch 7, dadurch gekennzeichnet, daß zum Feststellen des dem entsprechenden Signalblock des ersten Teilbandsignalteils, aus dem das zusammengesetzte Teilbandsignal aufgebaut ist, zugeordneten Skalenfaktors (SF₂) die Feststellungsmittel (43, 44, 45) zum Multiplizieren des zusammengesetzten Skalenfaktors mit cos α eingerichtet sind, und daß zum Feststellen des dem entsprechenden Signalblock des zweiten Teilbandsignalteils, aus dem das zusammengesetzte Teilbandsignal aufgebaut ist, zugeordneten Skalenfaktors (SFᵣ) die Feststellungsmittel (43, 44, 46) zum Multiplizieren des zusammengesetzten Skalenfaktors mit (-sin α) eingerichtet sind.

9. Codiereinrichtung nach einem der vorstehenden Ansprüche, dadurch gekennzeichnet, daß das Distanzmaß einem Fehlerwert entspricht, der der Summe der Quadrate der q Langen der q Senkrechten auf der genannten Linie (I-I) entspricht.

10. Codiereinrichtung nach Anspruch 7, dadurch gekennzeichnet, daß zum Feststellen des dem entsprechenden Signalblock des ersten Teilbandsignalteils, aus dem das zusammengesetzte Teilbandsignal aufgebaut ist, zugeordneten Skalenfaktors die Feststellungsmittel zum Berechnen der Größe${\text{SF}}_{\text{lr}} \sqrt{\text{S11/S2}}$ vorgesehen sind, wobei S₁₁ der Summe der Quadrate der Amplituden der q Abtastwerte in dem Signalblock des ersten Teilbandsignalteils entspricht, wobei S₂ der Summe der Quadrate der q Abtastwerte in dem Signalblock des zusammengesetzten Teilbandsignals entspricht und wobei SFₗᵣ der zusammengesetzte Skalenfaktor entsprechend der Amplitude des größten Abtastwertes in dem Signalblock der q Abtastwerte in dem zusammengesetzten Teilbandsignal ist. In dem Fall wird die Anforderung gestellt, daß die Leistungen des ersten Teilbandsignalteils vor und nach der Übertragung einander entsprechen.

11. Codiereinrichtung nach einem der vorstehenden Ansprüche, dadurch gekennzeichnet, daß die Skalenfaktorinformationsfeststellungsmittel mit den folgenden Elementen versehen sind:
- zweiten Quantisiermitteln (36) zum Quantisieren des dem entsprechenden Signalblock des ersten und/oder des zweiten Teilbandsignalteils, aus dem das zusammengesetzte Teilbandsignal aufgebaut ist, zugeordneten Skalenfaktors (SFₗ),
- Entquantisiermitteln (70) zum Entquantisieren der in den zweiten Quantisiermitteln quantisierten Skalenfaktoren, und
- Teilermitteln (71) zum Teilen des Skalenfaktors und des entquantisierten Skalenfaktors aufeinander zum Erhalten eines Koeffizienten, und daß die Quantisiermittel Multipliziermittel (72) aufweisen zum Multiplizieren der q Abtastwerte des zusammengesetzten Teilbandsignals mit dem Koeffizienten.

12. Codiereinrichtung nach Anspruch 11, dadurch gekennzeichnet, daß der Koeffizient dem Wert SFₗ/SF'ₗ entspricht, wobei SFₗ der Skalenfaktor ist, der dem entsprechenden Signalblock des ersten Teilbandsignalteils, aus dem das zusammengesetzte Teilbandsignal aufgebaut ist, zugeordnet ist, und wobei SF'ₗ der quantisierte Skalenfaktor SFₗ nach der Entquantisierung ist.

13. Codiereinrichtung nach Anspruch 11, dadurch gekennzeichnet, daß der Koeffizient dem Wert SFᵣ/SF'ᵣ entspricht, wobei SFᵣ der Skalenfaktor ist, der dem entsprechenden Signalblock des zweiten Teilbandsignalteils, aus dem das zusammengesetzte Teilbandsignal aufgebaut ist, zugeordnet ist, und wobei SF'ᵣ der quantisierte Skalenfaktor SFᵣ nach der Entquantisierung ist.

14. Codiereinrichtung nach Anspruch 11, dadurch gekennzeichnet, daß der Koeffizient eine Funktion ist von${\text{SF'}}_{\text{l}} {\text{/ SF}}_{\text{l}} {\text{und SF'}}_{\text{r}} {\text{/ SF}}_{\text{r}}$ wobei SFₗ und SFᵣ der Skalenfaktor ist, der dem entsprechenden Signalblock des zweiten Teilbandsignalteils, aus dem das zusammengesetzte Teilbandsignal aufgebaut ist, zugeordnet ist, und wobei SF'ₗ SF'ᵣ der quantisierte Skalenfaktor SFₗ und SFᵣ ist.

15. Codiereinrichtung nach Anspruch 14, dadurch gekennzeichnet, daß der Koeffizient dem folgenden Wert entspricht:$\sqrt{{\text{SF}}_{\text{l}} {\text{SF}}_{\text{r}} {\text{/ SF}}_{\text{l}}^{\text{'}} {\text{SF}}_{\text{r}}^{\text{'}}}$

16. Sender mit einer Codiereinrichtung nach einem der vorstehenden Ansprüche.

17. Sender nach Anspruch 16, dadurch gekennzeichnet, daß der Sender die Form einer Einrichtung zum Aufzeichnen quantisierter Teilbandsignale in einer Spur auf einem Aufzeichnungsträger (134) hat.

18. Sender nach Anspruch 17, dadurch gekennzeichnet, daß der Aufzeichnungsträger ein magnetischer Aufzeichnungsträger (134) ist.

19. Sender nach einem der Ansprüche 16, 17 oder 18 zum Übertragen des zusammengesetzten Teilbandsignals und der Skalenfaktorinformation in einer Intensitätsmode für wenigstens eines der Teilbänder, wobei dieser Sender eine Codiereinrichtung nach Anspruch 7 aufweist, dadurch gekennzeichnet, daß der Sender weiterhin eingerichtet ist zum Übertragen für jeden Signalblock der Skaleninformation in Form eines zusammengesetzten Skalenfaktors (SFₗᵣ), entsprechend der Amplitude des Abtastwertes mit der größten Amplitude in dem Signalblock und dem Wert von α.

20. Empfänger zum Empfangen des zusammengesetzten Teilbandsignals und der Skalenfaktorinformation, wie diese von dem Sender nach Anspruch 19 übertragen worden sind, dadurch gekennzeichnet, daß der Empfänger einen ersten und einen zweiten Multiplizierer (Fig. 6c) aufweist zum Multiplizieren des zusammengesetzten Skalenfaktors (SFₗᵣ) mit cos α bzw. (-sin α) zum Erhalten des Skalenfaktors, der dem ersten bzw, zweiten Teilbandsignalteil zugehört, und einen dritten und vierten Multiplizierer (30, 31) aufweist zum Multiplizieren der Abtastwerte des zusammengesetzten Teilbandsignals mit dem zugeordneten Skalenfaktor zum Erhalten des ersten bzw. zweiten Teilbandsignalteils.

21. Empfänger zum Empfangen des zusammengesetzten Teilbandsignals und der Skalenfaktorinformation, wie diese von dem Sender nach Anspruch 19 übertragen worden sind, dadurch gekennzeichnet, daß der Empfänger einen ersten Multiplizierer (Fig. 6d) aufweist zum Multiplizieren des zusammengesetzten Teilbandsignals mit dem zusammengesetzten Skalenfaktor, und einen zweiten und dritten Multiplizierer aufweist zum Multiplizieren des auf diese Weise erhaltenen Signals mit cos α bzw. (-sin α), zum Erhalten des ersten bzw. zweiten Teilbansignalteils.

22. Sender nach Anspruch 16, 17 oder 18 zum Übertragen des zusammengesetzten Teilbndsignals und der Skalenfaktorinformation in einer Intensitätsmode für wenigstens eines der Teilbänder, dadurch gekennzeichnet, daß der Sender dazu eingerichtet ist, für jeden Signalblock die Skalenfaktorinformation in Form eines dem ersten Teilbandsignalteil zugeordneten ersten Skalenfaktors und eines dem zweiten Teilbandsignalteil zugeordneten zweiten Skalenfaktors, sowie wenigstens ein dem einen oder dem anderen Skalenfkator zugeordnetes Vorzeichenbit zu übertragen.

23. Empfänger zum Empfangen eines übertragenen Signals mit dem zusammengesetzten Teilbandsignal und der Skalenfaktorinformation, wie diese von dem Sender nach Anspruch 22 übertragen worden sind, wobei die Skalenfaktorinformation einen ersten und einen zweiten Skalenfaktor aufweist, sowie wenigstens ein Vorzeichenbit, das dem einen oder dem anderen Skalenfaktor zugeordnet ist, dadurch gekennzeichnet, daß der Empfänger Rückgewinnungsmittel aufweist zum Rückgewinnen des zusammengesetzten Signals, der Skalenfaktoren und des wenigstens einen Vorzeichenbits aus dem übertragenen Signal, sowie Multipliziermittel (30, 31) zum Multiplizieren der Abtastwerte des zusammengesetzten Teilbandsignals mit dem zugeordneten Skalenfaktor zum Erhalten des ersten bzw. zweiten Teilbandsignalteils, wobei die Multipliziermittel (30, 31) dazu eingerichtet sind, in Antwort auf wenigstens ein Vorzeichenbit das Vorzeichen der Abtastwerte des ersten oder zweiten Teilbandsignalteils zu steuern.

24. Empfänger nach einem der Ansprüche 20, 21 und 23, dadurch gekennzeichnet, daß er die Struktur einer Einrichtung aufweist zum Auslesen von Information aus einer Spur auf einem Aufzeichnungsträger (134).

25. Empfänger nach Anspruch 24, dadurch gekennzeichnet, daß der Aufzeichnungsträger (134) ein magnetischer Aufzeichnungsträger ist.

26. Codierverfahren für Teilbandcodierung eines digitalen Breitbandsignals, beispielsweise eines digitalen Stereo-Tonsignals, das durch wenigstens einen ersten und einen zweiten Signalanteil gebildet wird, die mit je einer spezifischen Abtastfrequenz Fₛ abgetastet werden, wobei das Codierverfahren die nachfolgenden Verfahrensschritte umfaßt:
- das Spalten des digitalen Breitbandsignals zum Erzeugen einer Anzahl von M Teilbandsignalen durch Abtastfrequenzverringerung, wozu das Breitbandsignal in aufeinanderfolgende Teilbänder mit Bandnummern m aufgeteilt wird, die mit der Frequenz zunehmen, wobei 1 ≤ m ≤ M ist, und wobei jedes Teilbandsignal aus wenigstens einem ersten und einem zweiten Teilbandsignalteil aufgebaut ist, wobei das Codierverfahren weiterhin die nachfolgenden Verfahrensschritte umfaßt:
- das blockweise Quantisieren der ersten und zweiten Teilbandsignalteile eines Teilbandsignals in einem Teilband SBₘ, wobei ein quantisierter Teilbandsignalteil aufeinanderfolgende Signalblöcke aufweist, wobei jeder Signalblock q Abtastwerte aufweist, wobei die q Abtastwerte in entsprechenden Signalblöcken des ersten oder des zweiten quantisierten Teilbandsignalteils in dem Teilband SBₘ, je durch nₘ₁ bzw. nₘ₂ Bits dargestellt sind,
- das Feststellen von Skalenfaktorinformation, die sich auf einen Skalenfaktor bezieht, der jedem Signalblock von q Abtastwerten in den ersten und zweiten Teilbandsignalteilen der Teilbänder zugeordnet ist, und wobei in einer Intensitätsmodecodierung für wenigstens eines der Teilbänder das Codierverfahren die nachfolgenden Verfahrensschritte aufweist:
- das Kombinieren entsprechender Abtastwerte des ersten und des zweiten Teilbandsignalteils in dem Teilband eingerichtet sind zum Erhalten eines zusammengesetzten Signals in dem Teilband, und zum blockweisen Quantisieren des zusammengesetzten Signals in dem Teilband eingerichtet sind, wobei das quantisierte zusammengesetzte Signal in dem Teilband aus aufeinanderfolgenden Signalblöcken aufgebaut ist, wobei jeder Signalblock q Abtastwerte aufweist, wobei die q Abtastwerte in einem Signalblock des quantisierten zusammengesetzten Signals je durch n_{mc} Bits dargestellt werden,
dadurch gekennzeichnet, daß das Verfahren weiterhin den Verfahrensschritt umfaßt, eine gerade Linie in einer Ebene zu bestimmen, die durch ein fiktives rechteckiges Achsenkreuz mit zwei senkrecht aufeinander stehenden Achsen gebildet ist, für jedes der Teilbänder, für das eine Intensitätsmodecodierung möglich ist und für entsprechende Signalblöcke in dem ersten und zweiten Teilbandsignalteil eines derartigen Teilbandes, wobei diese Linie durch den Ursprung des Achsenkreuzes und durch eine Punktewolke von q Punkten in der Ebene geht, wobei diese Punkte dadurch gebildet werden, daß ein k. Abtastwert aus einem Signalblock von q Abtastwerten in dem ersten Teilbandsignalteil mit dem k. Abtastwert aus dem entsprechenden Signalblock von q Abtastwerten in dem zweiten Teilbandsignalteil, wobei k sich von 1 bis einschließlich q erstreckt, zusammengenommen werden, wobei k von 1 bis q variiert, und dadurch, daß ein k. Punkt in der Ebene bestimmt wird, in dem der k. Abtastwert des ersten Teilbandsignalteils auf der einen Achse des Achsenkreuzes und der k. Abtastwert des zweiten Teilbandsignalteils auf der anderen Achse des Achsenkreuzes aufgetragen wird, und daß für die Linie gilt, daß ein Distanzmaß, das ein Maß für den Abstand der Linie von allen q Punkten ist, minimal ist, daß ein Winkel β bestimmt wird, der im wesentlichen dem Winkel entspricht, den diese Linie mit derjenigen Achse des Achsenkreuzes einschließt, auf der die Abtastwerte des ersten Teilbandsignalteils aufgetragen sind, daß das Distanzmaß mit einem Schwellenwert verglichen wird, daß ein Steuersignal erzeugt wird, wenn das Distanzmaß den Schwellenwert nicht überschreitet, und daß eine Codierung in der Intensitätsmode an den entsprechenden Signalblöcken in dem ersten und dem zweiten Teilbandsignalteil des betreffenden Teilbandes durchgeführt wird, und daß die ersten und zweiten Signalteile kombiniert werden, indem die q Abtastwerte des ersten Teilbandsignalteils mit cos (α) multiplizieert werden, daß die q entsprechenden Abtastwerte des zweiten Teilbandsignalteils mit -sin (α) multipliziert werden und daß nach der Multiplikation die q Abtastwerte des ersten und des zweiten Teilbandsignalteils zu dem zusammengesetzten Teilbandsignal kombiniert werden, und daß α eine Beziehung zu dem Winkel β hat.

## Revendications

1. Système de codage comprenant un codeur en sous-bandes pour coder en sous-bandes un signal numérique à large bande, par exemple un signal audio stéréonumérique, constitué d'au moins une première et une deuxième composantes de signal qui sont échantillonnées chacune avec une fréquence d'échantillonnage spécifique Fₛ, le codeur en sous-bandes comprenant des moyens de division de signal (LP, BP, HP, 9) pour générer, en réaction au signal numérique à large bande, un nombre de M signaux à sous-bande par réduction de la fréquence d'échantillonnage, les moyens de division scindant à cet effet le signal à large bande en des sous-bandes successives ayant des nombres de bandes m qui augmentent avec la fréquence, où 1 ≤ m ≤ M, et dans lequel chaque signal à sous-bande est constitué d'au moins une première et une deuxième composantes de signal à sous-bande, le système de codage comprenant, en outre, des moyens de quantification (Q1, ... Qm) pour quantifier bloc par bloc la première et la deuxième composantes de signal à sous-bande dans une sous-bande SBₘ, une composante de signal à sous-bande quantifiée comprenant des blocs de signal successifs, chaque bloc de signal contenant q échantillons, les q échantillons de blocs de signal correspondants de la première et de la deuxième composantes de signal à sous-bande quantifiées dans la sous-bande SBₘ étant représentés par nₘ₁ et nₘ₂ bits, respectivement, et dans lequel, dans un codage en mode d'intensité pour au moins l'une des sous-bandes, les moyens de quantification (16, 17, 18) sont agencés pour combiner des échantillons correspondants de la première et de la deuxième composantes de signal à sous-bande dans la sous-bande de manière à obtenir un signal composite dans la sous-bande, et sont agencés pour quantifier bloc par bloc le signal composite dans la sous-bande, le signal composite quantifié dans la sous-bande étant constitué de blocs de signal successifs, chaque bloc de signal contenant q échantillons où les q échantillons d'un bloc du signal composite quantifié sont représentés chacun par n_{mc} bits, le système comprenant, en outre, des moyens de détermination d'information de facteur d'échelle (12, 13) pour déterminer des informations relatives à un facteur d'échelle appartenant à chaque bloc de signal de q échantillons dans la première et la deuxième composantes de signal à sous-bande des sous-bandes, caractérisé en ce que le système comprend des moyens de détermination d'angle (40') agencés pour déterminer une ligne droite (I-I) dans un plan formé par un système de coordonnées rectangulaires fictif ayant deux axes orthogonaux (l, r) pour chacune des sous-bandes pour lesquelles un codage en mode d'intensité est possible et pour des blocs de signal correspondants dans la première et la deuxième composantes de signal à sous-bande d'une telle sous-bande, la ligne passant par l'origine du système de coordonnées et par une nuée de q points (l[k], r[k]) dans le plan, lesdits points étant formés par combinaison du k^{ème} échantillon d'un bloc de signal de q échantillons dans la première composante de signal à sous-bande avec le k^{ème} échantillon du bloc de signal de q échantillons correspondant dans la deuxième composante de signal à sous-bande, où k varie de 1 à q, et, pour déterminer le k^{ème} point dans le plan, en portant en graphique le k^{ème} échantillon de la première composante de signal à sous-bande le long d'un axe du système de coordonnées et le k^{ème} échantillon de la deuxième composante de signal à sous-bande le long de l'autre axe, et en ce que, pour la ligne, il s'avère qu'une mesure de distance, qui est une mesure de la distance de la ligne à tous les points q, est minimum, en ce que les moyens de détermination d'angle (40') sont, en outre, agencés pour déterminer un angle β en substance égal à l'angle formé par la ligne et l'axe du système de coordonnées le long duquel les échantillons de la première composante de signal à sous-bande sont portés en graphique, en ce que les moyens de détermination d'angle comprennent un comparateur (en 50) pour comparer la mesure de distance avec un seuil, en ce que le comparateur est agencé pour générer un signal de commande si la mesure de distance ne dépasse pas le seuil, en ce que les moyens de quantification sont agencés pour exécuter un codage en mode d'intensité des blocs de signal correspondants dans la première et la deuxième composantes de signal à sous-bande de la sous-bande concernée en réaction au signal de commande, et en ce que les moyens de quantification comprennent à cette fin des moyens de combinaison de signaux (16, 41, 42) pour multiplier les q échantillons de la première composante de signal à sous-bande par cos(α), pour multiplier les q échantillons correspondants de la deuxième composante de signal à sous-bande par -sin(α) et pour combiner, après la multiplication, les échantillons correspondants de la première et de la deuxième composantes de signal à sous-bande de q échantillons pour obtenir le signal à sous-bande composite, et en ce que α a une relation avec l'angle β.

2. Système de codage selon la revendication 1, caractérisé en ce que α = -β.

3. Système de codage selon la revendication 1, caractérisé en ce que, pour le cas où β répond à la condition 0 ≤ β ≤ 90°, il s'avère que α = -β, en ce que, pour le cas où β répond à la condition 90° < β < 135°, il s'avère que α = -90°, et que, pour le cas où β répond à la condition -45° < β < 0, il s'avère que α = 0°.

4. Système de codage selon la revendication 3, caractérisé en ce que, pour le cas où β est égal à 135°, il s'avère que α = -90°.

5. Système de codage selon la revendication 3, caractérisé en ce que, pour le cas où β est égal à -45°, il s'avère que α = 0°.

6. Système de codage selon l'une quelconque des revendications précédentes, caractérisé en ce que les moyens de combinaison de signaux comprennent un premier moyen multiplicateur (41) pour multiplier q échantillons de la première composante de signal à sous-bande par cosα, un deuxième moyen multiplicateur (42) pour multiplier les q échantillons de la deuxième composante de signal à sous-bande par -sinα, et des moyens de sommation (16) pour sommer les signaux de sortie du premier et du deuxième moyens de multiplication.

7. Système de codage selon l'une quelconque des revendications précédentes, caractérisé en ce que les moyens de détermination d'informations sur les facteurs d'échelle sont agencés pour déterminer l'échantillon dans le bloc de signal de q échantillons du signal à sous-bande composite ayant l'amplitude la plus grande, et en ce que les moyens de quantification comprennent un diviseur (43) pour diviser les q échantillons par un facteur d'échelle composite (SFₗᵣ) avant la quantification de ces q échantillons du bloc de signal en un signal à sous-bande composite, le facteur d'échelle composite correspondant à l'amplitude de l'échantillon ayant la plus grande amplitude.

8. Système de codage selon la revendication 7, caractérisé en ce que, pour déterminer le facteur d'échelle (SFl) appartenant au bloc de signal correspondant de la première composante de signal à sous-bande dont le signal à sous-bande composite est constitué, les moyens de détermination (43, 44, 45) sont agencés pour multiplier le facteur d'échelle composite par cosα, et en ce que, pour déterminer le facteur d'échelle (SFr) appartenant au bloc de signal correspondant de la deuxième composante de signal à sous-bande dont le signal à sous-bande est constitué, les moyens de détermination (43, 44, 46) sont agencés pour multiplier le facteur d'échelle composite par (-sinα).

9. Système de codage selon l'une quelconque des revendications précédentes, caractérisé en ce que la mesure de la distance est égale à une valeur d'erreur qui est égale à la somme des carrés des q longueurs des q perpendiculaires à ladite ligne (I-I).

10. Système de codage selon la revendication 7, caractérisé en ce que, pour déterminer le facteur d'échelle à partir d'un bloc de signal correspondant de la première composante de signal à sous-bande dont le signal à sous-bande composite est constitué, les moyens de détermination sont agencés pour calculer la grandeur :${\text{SF}}_{\text{lr}} \sqrt{{\text{S}}_{\text{11}} \text{/} {\text{}}_{{\text{S}}_{\text{2}}}}$ où S11 est égal à la somme des carrés des amplitudes des q échantillons du bloc de signal de la première composante de signal à sous-bande, S2 est égal à la somme des carrés des q échantillons du bloc de signal à sous-bande composite et SFₗᵣ est le facteur d'échelle composite correspondant à l'amplitude de l'échantillon le plus grand du bloc de signal de q échantillons dans le signal à sous-bande composite.

11. Système de codage selon l'une quelconque des revendications précédentes, caractérisé en ce que les moyens de détermination d'informations sur les facteurs d'échelle comprennent :
- un deuxième moyen de quantification (36) pour quantifier le facteur d'échelle (SFₗ) qui appartient au bloc de signal correspondant de la première et/ou de la deuxième composante de signal à sous-bande dont le signal à sous-bande composite est constitué,
- un moyen de déquantification (70) pour déquantifier les facteurs d'échelle quantifiés dans le deuxième moyen de quantification, et
- des moyens de division (71) pour diviser le facteur d'échelle et le facteur d'échelle déquantifié l'un par l'autre pour obtenir un coefficient, et en ce que les moyens de quantification comprennent des moyens de multiplication (72) pour multiplier les q échantillons du signal à sous-bande composite par le coefficient.

12. Système de codage selon la revendication 11, caractérisé en ce que le coefficient est égal à SFₗ/SF'ₘ, où SFₗ est le facteur d'échelle appartenant au bloc de signal correspondant de la première composante de signal à sous-bande dont le signal à sous-bande composite est constitué, et SF'ₗ est la valeur du facteur d'échelle quantifié SFₗ après déquantification.

13. Système de codage selon la revendication 11, caractérisé en ce que le coefficient est égal à SFᵣ/SF'ᵣ, où SFᵣ est le facteur d'échelle appartenant au bloc de signal correspondant de la deuxième composante de signal à sous-bande dont le signal à sous-bande composite est formé, et SF'ᵣ est la valeur du facteur d'échelle quantifié SFᵣ après déquantification.

14. Système de codage selon la revendication 11, caractérisé en ce que le coefficient est une fonction de :${\text{SF'}}_{\text{l}} {\text{/ SF}}_{\text{l}} {\text{et SF'}}_{\text{r}} {\text{/ SF}}_{\text{r}}$ où SFₗ et SRᵣ sont les facteurs d'échelle appartenant aux blocs de signal correspondants de la première et de la deuxième composantes de signal à sous-bande, respectivement, dont le signal à sous-bande composite est constitué, et SF'ₗ et SF'ᵣ sont les valeurs des facteurs d'échelle quantifiés SFₗ et SFᵣ après déquantification.

15. Système de codage selon la revendication 14, caractérisé en ce que le coefficient est égal à :$\sqrt{{\text{SF}}_{\text{l}} {\text{SF}}_{\text{r}} {\text{/ SF}}_{\text{l}}^{\text{'}} {\text{SF}}_{\text{r}}^{\text{'}}}$

16. Emetteur comprenant un système de codage selon l'une quelconque des revendications précédentes.

17. Emetteur selon la revendication 16, caractérisé en ce que l'émetteur se présente sous la forme d'un dispositif pour enregistrer des signaux à sous-bande quantifiés sur une piste d'un support d'enregistrement (134).

18. Emetteur selon la revendication 17, caractérisé en ce que le support d'enregistrement est un support d'enregistrement magnétique (134).

19. Emetteur selon l'une quelconque des revendications 16, 17, ou 18 pour transmettre le signal à sous-bande composite et les informations sur les facteurs d'échelle en mode d'intensité pour au moins une des sous-bandes, ledit émetteur comprenant un système de codage selon la revendication 7, caractérisé en ce que l'émetteur est, en outre, agencé pour transmettre pour chaque bloc de signal des informations d'échelle sous la forme d'un facteur d'échelle composite (SFₗᵣ) correspondant à l'amplitude de l'échantillon ayant la plus grande amplitude dans le bloc de signal et la valeur de α.

20. Récepteur pour recevoir le signal à sous-bande composite et les informations sur les facteurs d'échelle transmis par l'émetteur selon la revendication 19, caractérisé en ce que le récepteur comprend un premier et un deuxième multiplicateurs (Fig. 6c) pour multiplier le facteur d'échelle composite (SFₗᵣ) par cosα ou (-sinα), respectivement, de manière à obtenir le facteur d'échelle appartenant à la première ou la deuxième composante de signal à sous-bande, respectivement et comprend un troisième et un quatrième multiplicateurs (30, 31) pour multiplier les échantillons du signal à sous-bande composite par le facteur d'échelle associé de manière à obtenir la première ou la deuxième composante de signal à sous-bande, respectivement.

21. Récepteur pour recevoir le signal à sous-bande composite et les informations sur les facteurs d'échelle transmis par l'émetteur selon la revendication 19, caractérisé en ce que le récepteur comprend un premier multiplicateur (Fig. 6d) pour multiplier le signal à sous-bande composite par le facteur d'échelle composite et un deuxième et un troisième multiplicateur pour multiplier le signal ainsi obtenu par cosα ou (-sinα), respectivement, de matière à obtenir la première ou la deuxième composante de signal à sous-bande, respectivement.

22. Emetteur selon l'une quelconque des revendications 16, 17, ou 18 pour transmettre le signal à sous-bande composite et les informations sur les facteurs d'échelle en mode d'intensité pour au moins une des sous-bandes, caractérisé en ce l'émetteur est agencé pour transmettre pour chaque bloc de signal les informations sur les facteurs d'échelle sous la forme d'un premier facteur d'échelle appartenant à la première composante de signal à sous-bande et d'un deuxième facteur d'échelle appartenant à la deuxième composante de signal à sous-bande, et au moins un bit de signe appartenant à l'un ou l'autre facteur d'échelle.

23. Récepteur pour recevoir un signal transmis comprenant le signal à sous-bande composite et les informations sur les facteurs d'échelle tels que transmis par l'émetteur selon la revendication 22, les informations sur les facteurs d'échelle comprenant un premier et un deuxième facteurs d'échelle et au moins un bit de signe appartenant à l'un ou l'autre facteur d'échelle, caractérisé en ce que le récepteur comprend des moyens de recherche pour retrouver le signal composite, les facteurs d'échelle et au moins un bit de signe dans le signal transmis, des moyens de multiplication (30, 31) pour multiplier les échantillons de signal à sous-bande composite par le facteur d'échelle associé de manière à obtenir la première ou la deuxième composante de signal à sous-bande, respectivement, les moyens de multiplication (30, 31) étant à même de commander le signe des échantillons de l'une de la première ou de la deuxième composante de signal à sous-bande en réaction audit au moins un bit de signe.

24. Récepteur selon l'une quelconque des revendications 20, 21 ou 23, caractérisé en ce que le récepteur a la structure d'un système permettant de lire les informations sur une des pistes d'un support d'enregistrement (134).

25. Récepteur selon la revendication 24, caractérisé en ce que le support d'enregistrement (134) est un support d'enregistrement magnétique.

26. Procédé de codage en sous-bandes d'un signal numérique à large bande, par exemple, un signal audio stéréo numérique, constitué d'au moins une première et une deuxième composantes de signal qui sont échantillonnées chacune avec une fréquence d'échantillonnage spécifique Fₛ, le procédé de codage comprenant les étapes consistant à :
diviser le signal numérique à large bande pour générer un nombre de M signaux à sous-bande par réduction de la fréquence d'échantillonnage, le signal à large bande étant divisé à cet effet en sous-bandes successives ayant des nombres de bandes m qui augmentent avec la fréquence, où 1 ≤ m ≤ M, et dans lequel chaque signal à sous-bande est constitué d'au moins une première et une deuxième composantes de signal à sous-bande, le procédé de codage comprenant, en outre, les étapes consistant à :
quantifier bloc par bloc la première et la deuxième composantes de signal à sous-bande dans une sous-bande SBₘ, une composante de signal à sous-bande quantifiée comprenant des blocs de signal successifs, chaque bloc de signal contenant q échantillons, les q échantillons de bloc de signal correspondants de la première et de la deuxième composantes de signal à sous-bande quantifiées dans la sous-bande SBₘ étant représentés par nₘ₁ et nₘ₂ bits, respectivement,
déterminer des informations sur le facteur d'échelle relatives à un facteur d'échelle appartenant à chaque bloc de signal de q échantillons dans la première et la deuxième composantes de signal à sous-bande des sous-bandes et dans lequel, en codage de mode d'intensité pour au moins l'une des sous-bandes, le procédé de codage comprend, en outre, l'étape consistant à :
combiner des échantillons correspondants de la première et de la deuxième composantes de signal à sous-bande dans la sous-bande de manière à obtenir un signal composite dans la sous-bande, et quantifier bloc par bloc du signal composite dans la sous-bande, le signal composite quantifié dans la sous-bande étant constitué de blocs de signal successifs, chaque bloc de signal contenant q échantillons où les q échantillons d'un bloc du signal composite quantifié sont représentés chacun par n_{mc} bits, caractérisé en ce que le procédé comprend en outre l'étape consistant à déterminer une ligne droite dans un plan formé par un système de coordonnées rectangulaires fictif ayant deux axes orthogonaux pour chacune des sous-bandes pour lesquelles un codage en mode d'intensité est possible et pour des blocs de signal correspondants dans la première et la deuxième composantes de signal à sous-bande d'une telle sous-bande, la ligne passant par l'origine du système de coordonnées et passant par une nuée de q points dans le plan, lesdits points étant formés par combinaison du k^{ème} échantillon d'un bloc de signal de q échantillons dans la première composante de signal à sous-bande avec le k^{ème} échantillon du bloc de signal de q échantillons correspondant dans la deuxième composante de signal à sous-bande, où k varie de 1 à q, à déterminer le k^{ème} point dans le plan, en portant en graphique le k^{ème} échantillon de la première composante de signal à sous-bande le long d'un axe du système de coordonnées et le k^{ème} échantillon de la deuxième composante de signal à sous-bande le long de l'autre axe, à déterminer la ligne de telle sorte que la mesure de distance, qui est une mesure de la distance de la ligne à tous les points q, soit minimum, et à déterminer un angle β en substance égal à l'angle formé par la ligne et l'axe du système de coordonnées le long duquel les échantillons de la première composante de signal à sous-bande sont portés en graphique, à comparer la mesure de distance avec un seuil, à générer un signal de commande si la mesure de distance ne dépasse pas le seuil, et à exécuter un codage en mode d'intensité des blocs de signal correspondants de la première et la deuxième composantes de signal à sous-bande de la sous-bande concernée en réaction au signal de commande, à combiner la première et la deuxième composantes de signal en multipliant les q échantillons de la première composante de signal à sous-bande par cos(α), à multiplier les q échantillons correspondants de la deuxième composante de signal à sous-bande par -sin(α) et à combiner, après la multiplication, les échantillons correspondants de la première et de la deuxième composantes de signal à sous-bande de q échantillons pour obtenir le signal à sous-bande composite, et en ce que α a une relation avec l'angle β.
